# EUROPEAN PATENT APPLICATION

(11) **EP 4 475 603 A1**
(43) Date of publication of application: **11.12.2024**
(21) Application number: 23762819.3
(22) Date of filing: 24.02.2023
(51) Int. Cl.: H04W 52/02

(54) **METHOD AND APPARATUS FOR CONTROLLING SLEEP OF NETWORK DEVICE, AND NETWORK DEVICE AND STORAGE MEDIUM**

(30) Priority: 01.03.2022 CN 202210194652
(71) Applicant: Huawei Technologies Co., Ltd., Shenzhen, Guangdong 518129 (CN)
(72) Inventor: XU, Xiaodong, Shenzhen, Guangdong 518129 (CN); WANG, Yingyu, Shenzhen, Guangdong 518129 (CN); WANG, Xiaozhong, Shenzhen, Guangdong 518129 (CN); WU, Jun, Shenzhen, Guangdong 518129 (CN)
(74) Representative: Pfenning, Meinig & Partner mbB
(86) International application number: PCT/CN2023/078070
(87) International publication number: WO 2023/165419

(57) **Abstract**

This application discloses a network device sleep control method and apparatus, a network device, and a storage medium, and pertains to the field of communication technologies. The method is applied to the network device, and the method includes: obtaining measurement data, where the measurement data is attribute data that indicates the network device to process a service; obtaining a first sleep policy, where the first sleep policy includes a rule item and an action item; determining that the measurement data meets the rule item; and controlling, according to the action item, one or more indicated sleep objects to sleep in a corresponding sleep time period, where the sleep objects include at least one of the following objects: a switch board, a switch chip, and a switch port, the network device includes a service board and the switch board, the switch board includes the switch chip and the switch port, and the switch port is used for communication between the switch board and the service board. According to this application, power consumption of the network device can be reduced.

## Description

This application claims priority to Chinese Patent Application No. 202210194652.8, filed on March 1, 2022 and entitled "NETWORK DEVICE SLEEP CONTROL METHOD AND APPARATUS, NETWORK DEVICE, AND STORAGE MEDIUM", which is incorporated herein by reference in its entirety.

### TECHNICAL FIELD

This application relates to the field of communication technologies, and in particular, to a network device sleep control method and apparatus, a network device, and a storage medium.

### BACKGROUND

A network device, such as a router and a switch, includes a service board, a switch board, and the like in structure. The service board is mainly responsible for receiving and sending a service signal, and the switch board is mainly responsible for forwarding the service signal between different service boards. For example, after receiving the service signal, the service board sends the service signal to the switch board, and the switch board forwards the service signal to another service board.

Usually, there are a plurality of switch boards, to meet forwarding work of the service signal. However, when a network device receives a small quantity of service signals, these switch boards still work normally, causing high energy consumption of the network device.

### SUMMARY

This application provides a network device sleep control method and apparatus, a network device, and a storage medium, to resolve a problem of high energy consumption of a network device in a conventional technology. Technical solutions are as follows.

According to a first aspect, a network device sleep control method is provided. The method is applied to a network device, and the method includes:
obtaining measurement data, where the measurement data is attribute data that indicates the network device to process a service;
obtaining a first sleep policy, where the first sleep policy includes a rule item and an action item;
determining that the measurement data meets the rule item; and
controlling, according to the action item, one or more indicated sleep objects to sleep in a corresponding sleep time period, where the sleep objects include at least one of the following objects: a switch board, a switch chip, and a switch port, the network device includes a service board and the switch board, the switch board includes the switch chip and the switch port, and the switch port is used for communication between the switch board and the service board.

In the solution shown in this application, before the method is used to control the network device to sleep, it is determined whether the measurement data, for example, traffic data, meets the rule item in the first sleep policy. If the measurement data meets the rule item in the first sleep policy, the sleep objects indicated according to the action item in the first sleep policy sleep in the corresponding sleep time period. In this sleep method, the measurement data of the network device is considered, and the measurement data reflects that the network device processes the service. In this case, the method not only ensures that the network device normally processes the service, but also maximizes sleep of the network device, and further maximize power consumption reduction of the network device.

In a possible implementation, the sleep objects include the switch board and/or the switch chip, the measurement data includes traffic data, the rule item includes a traffic range, and the rule item indicates the network device to determine whether the traffic data meets the traffic range; and
the determining that the measurement data meets the rule item includes:
determining that the traffic data meets the traffic range.

In the solution shown in this application, the rule item in the first sleep policy is related to the traffic data. In this case, the first sleep policy is suitable for traffic of the network device. In this case, when the network device sleeps, it is ensured that communication is not interrupted, and power consumption reduction is maximized.

In a possible implementation, the traffic data includes first duration-level traffic, the traffic range includes a first duration-level traffic range, and the rule item indicates the network device to determine whether the first duration-level traffic meets the first duration-level traffic range; and
the determining that the traffic data meets the rule item includes:
determining that the first duration-level traffic meets the first duration-level traffic range.

In a possible implementation, the action item indicates a sleep object corresponding to the first duration-level traffic range to sleep when it is determined that the first duration-level traffic in the sleep time period meets the first duration-level traffic range in the rule item; and
the controlling, according to the action item, one or more sleep objects to sleep in a corresponding sleep time period includes:
controlling the sleep object corresponding to the first duration-level traffic range to sleep in the corresponding sleep time period.

In a possible implementation, the traffic data includes first duration-level traffic and second duration-level traffic, duration of the first duration-level traffic is longer than duration of the second duration-level traffic, and the traffic range includes a first duration-level traffic range and a full-bandwidth traffic duration range;
the rule item indicates the network device to determine whether the first duration-level traffic meets the first duration-level traffic range, and whether duration corresponding to full-bandwidth traffic in the second duration-level traffic meets the full-bandwidth traffic duration range; and
the determining that the traffic data meets the rule item includes:
   determining that the first duration-level traffic meets the first duration-level traffic range, and that the duration corresponding to the full-bandwidth traffic in the second duration-level traffic meets the full-bandwidth traffic duration range.

In a possible implementation, the action item indicates a sleep object corresponding to the first duration-level traffic range and the full-bandwidth traffic duration range to sleep when it is determined that the first duration-level traffic in the sleep time period meets the first duration-level traffic range in the rule item, and the duration corresponding to the full-bandwidth traffic in the second duration-level traffic meets the full-bandwidth traffic duration range in the rule item; and
the controlling, according to the action item, one or more sleep objects to sleep in a corresponding sleep time period includes:
controlling the sleep object corresponding to the first duration-level traffic range and the full-bandwidth traffic duration range to sleep in the corresponding sleep time period.

In the solution shown in this application, the rule item in the first sleep policy is related to the full-bandwidth traffic, an event that the full-bandwidth traffic occurs is an emergency, and the first sleep policy considers the emergency. In this case, when the network device sleeps, it is ensured that network communication is not interrupted even if the emergency occurs, and power consumption reduction is maximized.

In a possible implementation, the sleep objects include the switch port, the measurement data includes the first duration-level traffic, the second duration-level traffic, and a maximum cache capacity, the duration of the first duration-level traffic is longer than the duration of the second duration-level traffic, and the rule item includes a first traffic threshold, first full-bandwidth duration, and a first cache threshold;
the rule item indicates the network device to determine whether the first duration-level traffic of a service chip of the service board is less than the first traffic threshold, whether the duration of the full-bandwidth traffic in the second duration-level traffic is less than the first full-bandwidth duration, and whether the maximum cache capacity is greater than the first cache threshold; and
the determining that the measurement data meets the rule item includes:
   determining that the first duration-level traffic of the service chip meets the first traffic threshold, the duration of the full-bandwidth traffic in the second duration-level traffic meets the first full-bandwidth duration, and the maximum cache capacity meets the first cache threshold.

In the solution shown in this application, the network device sleeps by using the switch port as a granularity, so that a minimum sleep granularity is implemented. A smaller sleep granularity indicates that power consumption can be reduced to a greater extent.

In a possible implementation, the action item indicates the switch port corresponding to the service chip to sleep when it is determined that the first duration-level traffic of the service chip in the sleep time period meets the first traffic threshold in the rule item, the duration of the full-bandwidth traffic in the second duration-level traffic meets the first full-bandwidth duration in the rule item, and the maximum cache capacity meets the first cache threshold; and
the controlling, according to the action item, one or more sleep objects to sleep in a corresponding sleep time period includes:
controlling the switch port corresponding to the service chip to sleep in the corresponding sleep time period.

In a possible implementation, the sleep objects include the switch port, the measurement data includes the first duration-level traffic, the second duration-level traffic, and a maximum cache capacity, the duration of the first duration-level traffic is longer than the duration of the second duration-level traffic, and the rule item includes a second traffic threshold, second full-bandwidth duration, and a first cache threshold;
the rule item indicates the network device to determine whether the first duration-level traffic of a service chip of the service board is less than a second duration-level traffic threshold, whether the duration of the full-bandwidth traffic in the second duration-level traffic is less than the second full-bandwidth duration, and whether the maximum cache capacity is less than the first cache threshold; and
the determining that the measurement data meets the rule item includes:

   determining that the first duration-level traffic of the service chip meets the second traffic threshold, the duration of the full-bandwidth traffic in the second duration-level traffic meets the second full-bandwidth duration, and the maximum cache capacity meets the first cache threshold.

In a possible implementation, the action item indicates the switch port corresponding to the service chip to sleep when it is determined that the first duration-level traffic of the service chip in the sleep time period meets the second traffic threshold in the rule item, the duration of the full-bandwidth traffic in the second duration-level traffic meets the second full-bandwidth duration in the rule item, and the maximum cache capacity meets the first cache threshold; and
the controlling, according to the action item, one or more sleep objects to sleep in a corresponding sleep time period includes:

controlling the switch port corresponding to the service chip to sleep in the corresponding sleep time period.

In a possible implementation, the method further includes: determining that the measurement data does not meet the rule item;
determining an updated action item based on the measurement data; and
controlling, according to the updated action item, the indicated sleep objects to sleep in the corresponding sleep time period.

In the solution shown in this application, when the measurement data does not meet the rule item, the sleep object is updated based on the measurement data, to ensure that communication is not interrupted, and power consumption can be reduced.

In a possible implementation, the method further includes:
updating the first sleep policy according to the updated action item.

In the solution shown in this application, the obtained measurement data is measurement data at a current stage, and the measurement data at the current stage can best reflect future measurement data. Therefore, when the measurement data does not meet the rule item, the first sleep policy is updated in time, so that an updated first sleep policy can better meet the future measurement data. In this way, the first sleep policy is dynamically adjusted based on the obtained measurement data, so that power consumption reduction can be maximized.

In a possible implementation, the method further includes:
waking up all or a part of the sleep objects when the sleep objects are in a sleep state and a wake-up event is detected, where
the wake-up event includes at least one of the following: a current cache capacity of at least one service chip reaches a second cache threshold, and a hardware configuration of the network device changes, where the hardware configuration change includes at least one of the following: a service board is newly added, and a fault occurs on an object in a non-sleep state.

In the solution shown in this application, when the wake-up event is detected, the sleep object is woken up in time, so that packet loss events can be reduced or even avoided, to ensure reliability of communication quality of the network device.

In a possible implementation, the waking up all or a part of the sleep objects when a wake-up event is detected includes:
waking up all of the sleep objects when the newly added service board is detected; and
the method further includes:
   controlling the network device to work in the non-sleep state for preset duration; and
   determining a second sleep policy based on traffic of the service chip within the preset duration, where the second sleep policy is used to replace the first sleep policy.

In a possible implementation, the method further includes:
controlling, in the sleep time period, a heat dissipation system of the network device to dissipate heat according to a heat dissipation policy corresponding to the sleep object in the sleep time period; and
controlling the heat dissipation system to dissipate heat according to a heat dissipation policy corresponding to a remaining sleep object after wake-up when the wake-up event is detected.

In the solution shown in this application, the foregoing dynamically adjusting the heat dissipation policy of the heat dissipation system based on the sleep object not only provides heat dissipation for the network device, but also further reduces power consumption of the network device.

In a possible implementation, the heat dissipation system includes a fan, and adjusting the heat dissipation policy includes at least one of adjusting a quantity of fans turned on and adjusting a rotation speed of a fan in a turn-on state.

According to a second aspect, this application provides a network device sleep control apparatus. The apparatus is used in a network device, and the apparatus includes:
a first obtaining module, configured to obtain measurement data, where the measurement data is attribute data that indicates the network device to process a service;
a second obtaining module, configured to obtain a first sleep policy, where the first sleep policy includes a rule item and an action item;
a determining module, configured to determine that the measurement data meets the rule item; and
a sleep module, configured to control, according to the action item, one or more indicated sleep objects to sleep in a corresponding sleep time period, where the sleep objects include at least one of the following objects: a switch board, a switch chip, and a switch port, the network device includes a service board and the switch board, the switch board includes the switch chip and the switch port, and the switch port is used for communication between the switch board and the service board.

In a possible implementation, the sleep objects include the switch board and/or the switch chip, the measurement data includes traffic data, the rule item includes a traffic range, and the rule item indicates the network device to determine whether the traffic data meets the traffic range; and
the determining module is configured to determine that the traffic data meets the traffic range.

In a possible implementation, the traffic data includes first duration-level traffic, the traffic range includes a first duration-level traffic range, and the rule item indicates the network device to determine whether the first duration-level traffic meets the first duration-level traffic range; and
the determining module is configured to determine that the first duration-level traffic meets the first duration-level traffic range.

In a possible implementation, the action item indicates a sleep object corresponding to the first duration-level traffic range to sleep when it is determined that the first duration-level traffic in the sleep time period meets the first duration-level traffic range in the rule item; and
the sleep module is configured to control the sleep object corresponding to the first duration-level traffic range to sleep in the corresponding sleep time period.

In a possible implementation, the traffic data includes first duration-level traffic and second duration-level traffic, duration of the first duration-level traffic is longer than duration of the second duration-level traffic, and the traffic range includes a first duration-level traffic range and a full-bandwidth traffic duration range;
the rule item indicates the network device to determine whether the first duration-level traffic meets the first duration-level traffic range, and whether duration corresponding to full-bandwidth traffic in the second duration-level traffic meets the full-bandwidth traffic duration range; and
the determining module is configured to determine that the first duration-level traffic meets the first duration-level traffic range, and that the duration corresponding to the full-bandwidth traffic in the second duration-level traffic meets the full-bandwidth traffic duration range.

In a possible implementation, the action item indicates a sleep object corresponding to the first duration-level traffic range and the full-bandwidth traffic duration range to sleep when it is determined that the first duration-level traffic in the sleep time period meets the first duration-level traffic range in the rule item, and the duration corresponding to the full-bandwidth traffic in the second duration-level traffic meets the full-bandwidth traffic duration range in the rule item; and
the sleep module is configured to control the sleep object corresponding to the first duration-level traffic range and the full-bandwidth traffic duration range to sleep in the corresponding sleep time period.

In a possible implementation, the sleep objects include the switch port, the measurement data includes the first duration-level traffic, the second duration-level traffic, and a maximum cache capacity, the duration of the first duration-level traffic is longer than the duration of the second duration-level traffic, and the rule item includes a first traffic threshold, first full-bandwidth duration, and a first cache threshold;
the rule item indicates the network device to determine whether the first duration-level traffic of a service chip of the service board is less than the first traffic threshold, whether the duration of the full-bandwidth traffic in the second duration-level traffic is less than the first full-bandwidth duration, and whether the maximum cache capacity is greater than the first cache threshold; and
the determining module is configured to determine that the first duration-level traffic of the service chip meets the first traffic threshold, the duration of the full-bandwidth traffic in the second duration-level traffic meets the first full-bandwidth duration, and the maximum cache capacity meets the first cache threshold.

In a possible implementation, the action item indicates the switch port corresponding to the service chip to sleep when it is determined that the first duration-level traffic of the service chip in the sleep time period meets the first traffic threshold in the rule item, the duration of the full-bandwidth traffic in the second duration-level traffic meets the first full-bandwidth duration in the rule item, and the maximum cache capacity meets the first cache threshold; and
the sleep module is configured to control the switch port corresponding to the service chip to sleep in the corresponding sleep time period.

In a possible implementation, the sleep objects include the switch port, the measurement data includes the first duration-level traffic, the second duration-level traffic, and a maximum cache capacity, the duration of the first duration-level traffic is longer than the duration of the second duration-level traffic, and the rule item includes a second traffic threshold, second full-bandwidth duration, and a first cache threshold;
the rule item indicates the network device to determine whether the first duration-level traffic of a service chip of the service board is less than a second duration-level traffic threshold, whether the duration of the full-bandwidth traffic in the second duration-level traffic is less than the second full-bandwidth duration, and whether the maximum cache capacity is less than the first cache threshold; and
the determining module is configured to determine that the first duration-level traffic of the service chip meets the second traffic threshold, the duration of the full-bandwidth traffic in the second duration-level traffic meets the second full-bandwidth duration, and the maximum cache capacity meets the first cache threshold.

In a possible implementation, the action item indicates the switch port corresponding to the service chip to sleep when it is determined that the first duration-level traffic of the service chip in the sleep time period meets the second traffic threshold in the rule item, the duration of the full-bandwidth traffic in the second duration-level traffic meets the second full-bandwidth duration in the rule item, and the maximum cache capacity meets the first cache threshold; and
the sleep module is configured to control the switch port corresponding to the service chip to sleep in the corresponding sleep time period.

In a possible implementation, the determining module is further configured to determine that the measurement data does not meet the rule item, and determine an updated action item based on the measurement data; and
the sleep module is further configured to control, according to the updated action item, the indicated sleep objects to sleep in the corresponding sleep time period.

In a possible implementation, the apparatus further includes:
an updating module, configured to update the first sleep policy according to the updated action item.

In a possible implementation, the apparatus further includes:
a wake-up module, configured to wake up all or a part of the sleep objects when the sleep objects are in a sleep state and a wake-up event is detected, where
the wake-up event includes at least one of the following: a current cache capacity of at least one service chip reaches a second cache threshold, and a hardware configuration of the network device changes, where the hardware configuration change includes at least one of the following: a service board is newly added, and a fault occurs on an object in a non-sleep state.

In a possible implementation, the wake-up module is configured to wake up all of the sleep objects when the newly added service board is detected; and
the apparatus further includes:
a control module, configured to control the network device to work in the non-sleep state for preset duration; and
a third obtaining module, further configured to determine a second sleep policy based on traffic of the service chip within the preset duration, where the second sleep policy is used to replace the first sleep policy.

In a possible implementation, the apparatus further includes:
a heat dissipation control module, configured to: control, in the sleep time period, a heat dissipation system of the network device to dissipate heat according to a heat dissipation policy corresponding to the sleep object in the sleep time period; and
control the heat dissipation system to dissipate heat according to a heat dissipation policy corresponding to a remaining sleep object after wake-up when the wake-up event is detected.

In a possible implementation, the heat dissipation system includes a fan, and adjusting the heat dissipation policy includes at least one of adjusting a quantity of fans turned on and adjusting a rotation speed of a fan in a turn-on state.

According to a third aspect, this application provides a network device. The network device includes a processor, and the processor is configured to execute computer instructions, to enable the network device to perform the network device sleep control method in the first aspect.

According to a fourth aspect, this application provides a computer-readable storage medium. The computer-readable storage medium stores at least one computer instruction, and the computer instruction is read by a processor of a network device, to enable the network device to perform the network device sleep control method in the first aspect.

According to a fifth aspect, the present disclosure provides a computer program product. The computer program product includes computer instructions, and the computer instructions are stored in a computer-readable storage medium. A processor of a network device reads the computer instructions from the computer-readable storage medium, and the processor executes the computer instructions, to enable the network device to perform the network device sleep control method in the first aspect.

In a possible implementation, the processor is located on a main control board of the network device.

### BRIEF DESCRIPTION OF DRAWINGS

FIG. 1 is a schematic diagram of a structure of a frame-shaped network device according to this application;
FIG. 2 is a schematic diagram of a structure of a frame-shaped network device according to this application;
FIG. 3 is a schematic diagram of a correspondence between traffic and time of a network device according to this application;
FIG. 4 is a flowchart of a network device sleep control method according to this application;
FIG. 5 is a flowchart of a network device sleep control method according to this application;
FIG. 6 is a flowchart of a network device sleep control method according to this application;
FIG. 7 is a flowchart of a network device sleep control method according to this application; and
FIG. 8 is a schematic diagram of a structure of a network device sleep control apparatus according to this application.

### DESCRIPTION OF EMBODIMENTS

An embodiment of this application provides a network device sleep control method. The method is applied to a network device. Network devices may also be referred to as communication devices, such as a router and a switch, and are configured to receive and send data.

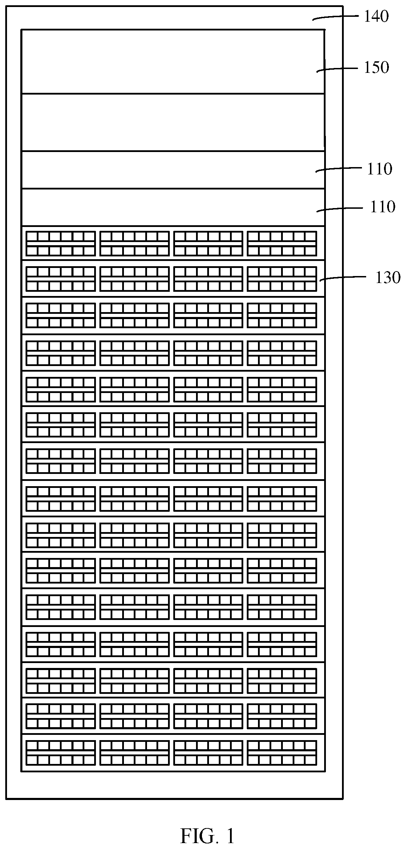

The network device may include a frame-shaped network device. FIG. 1 is a schematic diagram of an architecture of a frame-shaped network device. The network device includes a main control board 110, a switch board 120 (not shown in FIG. 1), a service board 130, a subrack 140, a power module 150, and the like. The main control board 110 is configured to manage the switch board 120 and the service board 130, and a quantity of main control boards 110 may be one or more, for example, two. The service board 130 is configured to be responsible for receiving and sending data. Specifically, the service board 130 has a service chip (where a quantity of service chips may be one or more), and is responsible for receiving and sending the data by using the service chip. A quantity of service boards 130 may be more than one, for example, 16. The switch board 120 is configured to forward the data. Specifically, the switch board 120 has a switch chip (where a quantity of switch chips may be one or more), and is responsible for forwarding the data between different service chips. A quantity of switch boards 120 may be more than one, for example, eight.

The method may be performed by the network device. For example, the method may be performed by a processor in the network device, and the processor is located on the main control board of the network device.

The following describes the network device in more detail by using an example.

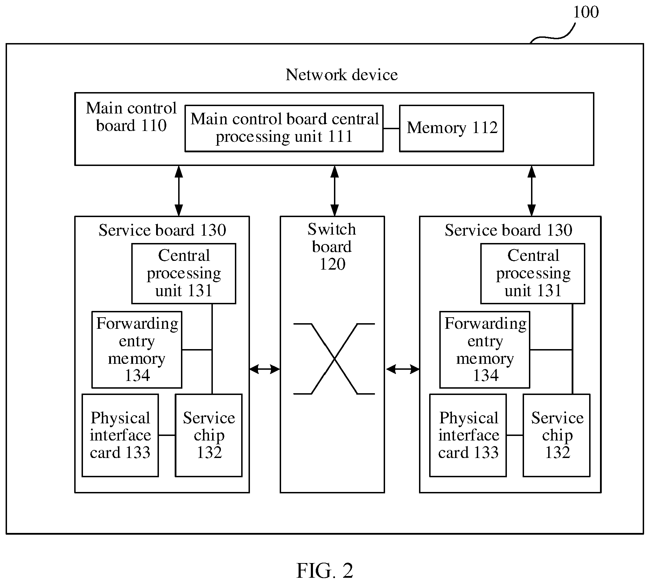

FIG. 2 is a schematic logical diagram of a network device 100. The network device 100 includes a main control board 110, a switch board 120, and service boards 130.

The main control board 110 is also referred to as a main processing unit (main processing unit, MPU) or a route processor card (route processor card). The main control board 110 is configured to control and manage each component in the network device 100, and includes functions of route calculation, device management, device maintenance, and protocol processing. The main control board 110 includes a main control board central processing unit 111 and a memory 112. The network device sleep control method provided in this embodiment of this application may be performed by the main control board central processing unit 111 on the main control board 110.

The switch board 120 may also be referred to as a switch fabric unit (switch fabric unit, SFU) or a fabric board. When the network device 100 has a plurality of service boards 130, the switch board 120 is configured to complete data exchange between the service boards 130. For example, the two service boards 130 in FIG. 2 may communicate with each other by using the switch board 120.

The service board 130 is also referred to as an interface board, a line interface unit card (line processing unit, LPU), or a line card (line card). The service board 130 is configured to provide various service interfaces and implement data packet forwarding. A service interface includes but is not limited to an Ethernet interface, a POS (Packet over SONET/SDH) interface, and the like. The Ethernet interface is, for example, a flexible Ethernet client (Flexible Ethernet Client, FlexE Client). The service board 130 includes a central processing unit 131, a service chip 132 (where the service chip may also be referred to as a network chip), a forwarding entry memory 134, and a physical interface card (physical interface card, PIC) 133.

The central processing unit 131 on the service board 130 is configured to control and manage the service board 130 and communicate with the main control board central processing unit 111 on the main control board 110. The network device sleep control method provided in this embodiment of this application may alternatively be performed by the central processing unit 131 on the service board 130.

The service chip 132 is configured to implement packet forwarding processing. A form of the service chip 132 may be a forwarding chip. Specifically, the service chip 132 is configured to forward a received packet based on a forwarding table stored in the forwarding entry memory 134. If a destination address of the packet is an address of the network device 100, the service chip sends the packet to a CPU (for example, the main control board central processing unit 111) for processing. If the destination address of the packet is not the address of the network device 100, the service chip finds, from the forwarding table based on the destination address, a next hop and an egress interface that correspond to the destination address, and forwards the packet to the egress interface corresponding to the destination address. Processing of an uplink packet includes processing an ingress interface of the packet and searching the forwarding table. Processing of a downlink packet includes searching the forwarding table and the like.

The physical interface card 133 is configured to implement a physical layer interconnection function. Original traffic enters the service board 130 from the physical interface card 133, and a processed packet is sent from the physical interface card 133. The physical interface card 133 is also referred to as a subcard, may be mounted on the service board 130, and is responsible for converting an optical/electrical signal into a packet, performing validity check on the packet, and forwarding the packet to the service chip 132 for processing. In some embodiments, the central processing unit may also perform a function of the service chip 132, for example, implement software forwarding based on a general-purpose CPU, so that the physical interface card 133 does not need the service chip 132. The physical interface card 133 may have a port.

In some examples, the network device 100 includes the plurality of service boards 130.

The main control board 110 is coupled to the service boards 130. For example, the main control board 110, the two service boards 130, and the switch board 120 are connected to a system backplane by using a system bus to implement interworking. In some examples, an inter-process communication protocol (inter-process communication, IPC) channel is established between the main control board 110 and the service boards 130, and the main control board 110 and the service boards 130 communicate with each other through the IPC channel.

Logically, the network device 100 includes a control plane and a forwarding plane. The control plane includes the main control board 110 and the central processing unit 131. The forwarding plane includes various components for forwarding, for example, the forwarding entry memory 134, the physical interface card 133, and the network chip 132. The control plane implements functions of a router, generating the forwarding table, processing signaling and a protocol packet, configuring and maintaining a device status, and the like. The control plane delivers the generated forwarding table to the forwarding plane. On the forwarding plane, the service chip 132 performs, based on the forwarding table delivered by the control plane, table lookup and forwarding on a packet received by the physical interface card 133. The forwarding table delivered by the control plane may be stored in the forwarding entry memory 134. In some embodiments, the control plane and the forwarding plane may be completely separated, and are not on a same device.

It should be noted that there may be one or more main control boards 110, and when there are the plurality of main control boards, an active main control board and a standby main control board may be included. There may be one or more service boards 130, and a network device with a stronger data processing capability provides a larger quantity of service boards 130. There may also be one or more physical interface cards on the service board 130. There may also be one or more switch boards 120, and when there are the plurality of switch boards 120, load sharing and redundancy backup may be implemented together. In a distributed forwarding architecture, the network device may have at least one switch board 120, and implements data exchange between a plurality of service boards 130 by using the switch board 120, to provide a large-capacity data exchange and processing capability. Therefore, a data access and processing capability of the network device in the distributed architecture is better than a data access and processing capability of a device in a centralized architecture.

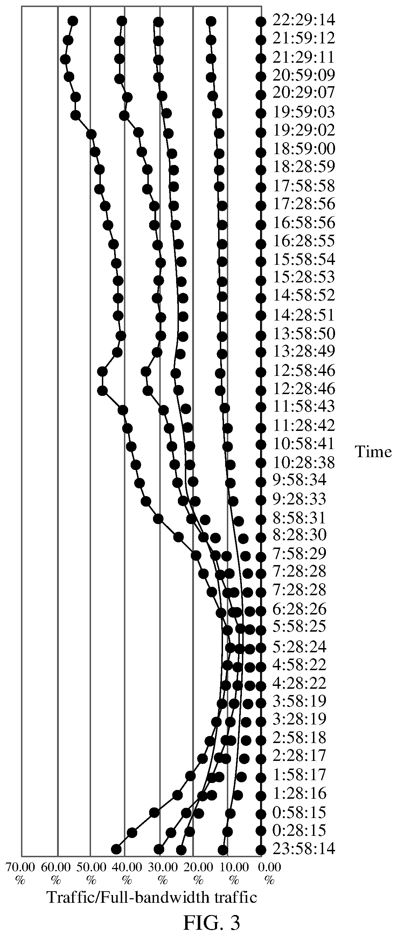

During application of the network device, traffic data received by the network device has a definite tidal rule. For example, as shown in FIG. 3, traffic received at night is low, and is usually lower than 20% or even 10% of full-bandwidth traffic. Each curve in FIG. 3 represents traffic data of a physical interface of a service board, and the full-bandwidth traffic is maximum traffic that can be received by the physical interface. For example, a 100G physical interface has full-bandwidth traffic of 100G.

A quantity of switch boards is usually determined based on a quantity of switch boards required by the network device with the full-bandwidth traffic. However, traffic processed by the network device during work usually cannot reach the full-bandwidth traffic, and is far from reaching the full-bandwidth traffic especially in a scenario in which the traffic is low at night. However, when the traffic received by the network device does not reach or even is far from reaching the full-bandwidth traffic, most or even all switch boards of the network device are still working normally. This causes high energy consumption of the network device.

To reduce energy consumption of the network device, in a conventional technology, power-off or sleep processing is performed on some switch boards. For example, the switch board usually has a redundancy mechanism. For example, the network device includes eight switch boards, where seven switch boards are used as active switch boards, and one switch board is used as a standby switch board. To reduce power consumption, the standby switch board is powered off when the network device is idle.

However, if the standby switch board is powered off, communication is interrupted when a fault occurs on a working switch board. In addition, if only the standby switch board is powered off, the power consumption of the network device is still high, and energy saving cannot be maximized.

However, if the network device includes the eight switch boards, when the traffic data of the network device is less than 20% of the full-bandwidth traffic, theoretically, only two of the eight switch boards are required to meet a bandwidth requirement of the network device. This provides an implementation basis for the energy saving of the network device.

In this case, according to the network device sleep control method provided in this embodiment of this application, a quantity of sleep switch boards may be controlled based on traffic of the network device. In this way, not only that the network device normally processes the received traffic can be ensured, but also power consumption reduction of the network device can be maximized.

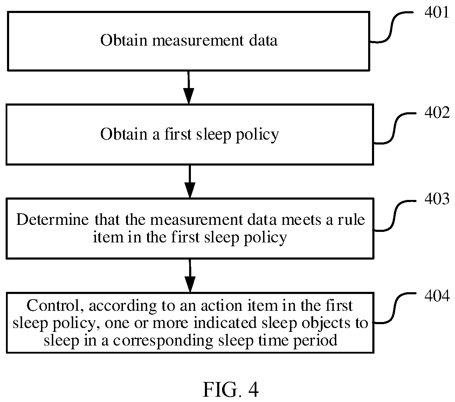

Refer to FIG. 4. The following describes a processing procedure of the method in detail with reference to specific implementations. Content may be as follows.

In step 401, measurement data is obtained.

The measurement data is attribute data that indicates a network device to process a service.

For example, the measurement data may include traffic data of a service chip. For another example, the measurement data may alternatively include traffic data of a service chip and a maximum cache capacity of the service chip. The maximum cache capacity of the service chip is a maximum capacity that the service chip can cache, and represents a cache capability of the service chip.

In step 402, a first sleep policy is obtained.

The first sleep policy includes a rule item and an action item.

In an example, the rule item is used as a determining condition of the first sleep policy, and is used to determine whether sleep can be performed according to the first sleep policy. For example, if the measurement data includes the traffic data, the rule item may include a traffic range or a traffic threshold, and is used to determine whether the traffic data meets the traffic range, or is used to determine whether the traffic data is greater than (or less than) the traffic threshold. The action item indicates one or more sleep objects to sleep. For example, when the traffic data meets the traffic range, the action item indicates a sleep object corresponding to the traffic range to sleep. For another example, when the traffic data meets the traffic threshold, the traffic data indicates a sleep object corresponding to the traffic threshold to sleep.

In step 403, it is determined that the measurement data meets the rule item.

For example, if the measurement data includes the traffic data, it may be determined that the traffic data is within the traffic range, or it is determined that the traffic data is greater than (or less than) the traffic threshold.

In step 404, the indicated sleep objects are controlled, according to the action item, to sleep in a corresponding sleep time period.

The sleep objects include at least one of the following objects: a switch board, a switch chip, and a switch port. The switch chip is also a chip of the switch board. The switch port is used for communication between the switch board and a service board. For example, the switch port is used to implement communication between the switch chip of the switch board and a service chip of the service board. For example, the switch port may be a serializer/deserializer (Serializer/Deserializer, Serdes).

In an example, if the sleep objects include the switch board, the entire switch board is in a sleep state, and the switch board is used as a sleep granularity to control the network device to sleep. If the sleep objects include the switch chip, the entire switch chip is in the sleep state, and another switch chip on a switch board on which the switch chip in the sleep state is located is not necessarily in the sleep state, and the switch chip is used as a sleep granularity to control the network device to sleep. If the sleep objects include the switch port, a switch chip on which the switch port is located is in the sleep state for a service chip connected to the switch port, and is not necessarily in the sleep state for a service chip connected to another switch port, and the switch port is used as a sleep granularity to control the network device to sleep.

Based on the foregoing descriptions, before the method is used to control the network device to sleep, it is determined whether the measurement data, for example, the traffic data, meets the rule item in the first sleep policy. If the measurement data meets the rule item in the first sleep policy, the sleep objects indicated according to the action item in the first sleep policy sleep in the corresponding sleep time period. In this sleep method, the measurement data of the network device is considered, and the measurement data reflects that the network device processes the service. In this case, the method not only ensures that the network device normally processes the service, but also maximizes sleep of the network device, and further maximizes power consumption reduction of the network device.

In an example, the sleep may include at least one of the following: reset, disabling, and low power consumption running. The reset is also initialization. For example, the switch chip may be controlled to be reset. The disabling, for example, may be one or more of the following: disabling Serdes, disabling clock gating (Clock Gating), and disabling power gating (Power Gating). The low power consumption running may be that a running frequency of the sleep object is lower than a standard running frequency, and the standard running frequency is a frequency at which the sleep object runs in a non-sleep state.

In an example, when the sleep objects are to sleep, the sleep objects may sleep periodically and alternately. For example, in a first time period, it is determined that four sleep objects numbered 1 to 4 may sleep; in a second time period, it is determined that three sleep objects numbered 5 to 7 may sleep; and in a third time period, it is determined that four sleep objects numbered 8 to 11 may sleep. In this way, it can be ensured that each sleep object can sleep, so that all the sleep objects have similar use duration and service life.

In an example, content included in measurement data corresponding to different sleep objects is different. For example, if the sleep objects may include the switch board and/or the switch chip, the measurement data may include the traffic data. For another example, if the sleep objects include the switch port, the measurement data includes the traffic data and the maximum cache capacity representing the cache capability of the service chip. Because the measurement data is different, rule items and action items in corresponding first sleep policies are different. In this case, the following separately describes the rule items and action items in the first sleep policies when the sleep objects include the switch board and/or the switch chip and when the sleep objects include the switch port.
(I) The sleep objects include the switch board and/or the switch chip.

As described above, the measurement data includes the traffic data. The traffic data may be traffic in a time period, or may be a percentage of the traffic in the time period to full-bandwidth traffic. FIG. 3 shows percentages of traffic of physical interfaces to full-bandwidth traffic of the physical interfaces.

Traffic data of an upper switch board is basically equal to traffic data of a lower switch board in a time period, and the traffic data of the upper switch board is traffic data received from the service chip. Therefore, the traffic data in the time period may be represented by traffic data received by the service chip in the time period. Usually, the traffic data is viewed by using the service chip as a granularity. In this case, the traffic data described below is considered as the traffic data of the service chip unless otherwise specified. Correspondingly, the traffic data may be traffic data of the service chip in a time period, or may be a percentage of the traffic data in the time period to full-bandwidth traffic of the service chip.

The traffic data of the service chip may be traffic data collected in a current time period. For example, the traffic data is minute-level traffic. In this case, the traffic data may be traffic collected in several minutes (for example, 20 minutes). The traffic data may alternatively be a weighted value of historical data and traffic collected in a current time period. The traffic collected in the current time period may relatively represent future traffic, and therefore, a weight of the traffic collected in the current time period may be large.

In an example, the traffic data of the service chip may be determined by using traffic data of each physical interface. For example, a service chip of each service board corresponds to a plurality of physical interfaces. After the network device obtains traffic data of each physical interface in a time period, traffic data of the service chip in the time period is obtained. For example, a sum of traffic data of all the physical interfaces of the service chip is the traffic data of the service chip.

In an example, the measurement data includes the traffic data. In this case, the rule item may include the traffic range. The traffic range may be understood as a traffic-related range. For example, the traffic range may include a first duration-level traffic range, or may include a first duration-level traffic range and a full-bandwidth traffic duration range. The rule item indicates the network device to determine whether the traffic data meets the traffic range, that is, determine whether the traffic data is within the traffic range. The traffic range may be one range, or may include a plurality of ranges. If the traffic range includes the plurality of ranges, it is necessary to determine a specific traffic range that the traffic data falls within.

The traffic range may be determined based on previous traffic of the service chip in a corresponding time period, that is, determined based on historical traffic of the service chip.

In this case, step 403 may be specifically: determining that the traffic data meets the traffic range, that is, determining that the traffic data is within the traffic range.

The action item in the first sleep policy indicates that the sleep object corresponding to the traffic range sleep in the corresponding sleep time period.

Correspondingly, step 404 may be specifically: controlling the sleep object corresponding to the traffic range to sleep in the corresponding sleep time period.

As described above, the traffic data is the traffic within the time period. Classification is performed based on a duration level of the traffic data, so that the traffic data may include first duration-level traffic, or the traffic data may include first duration-level traffic and second duration-level traffic. For details, refer to the following descriptions.
(1) The traffic data of the service chip may include the first duration-level traffic, and the first duration-level traffic may be minute-level traffic, for example, traffic within 20 minutes or 30 minutes. In this case, the traffic range in the rule item may include the first duration-level traffic range, and the rule item specifically indicates the network device to determine whether the first duration-level traffic meets the first duration-level traffic range.

In an example, each time one piece of first duration-level traffic is obtained in the sleep time period, the network device may determine whether the corresponding first duration-level traffic range is met. Alternatively, each time several pieces of first duration-level traffic are obtained, the network device may determine whether these pieces of first duration-level traffic meet the corresponding first duration-level traffic range, for example, determine whether average traffic of these pieces of first duration-level traffic meets the corresponding first duration-level traffic range, or determine whether a largest piece of first duration-level traffic among these pieces of first duration-level traffic meets the corresponding first duration-level traffic range. Alternatively, each time first duration-level traffic in a time period (corresponding duration is longer than duration of the first duration-level traffic) is obtained, the network device may determine whether the first duration-level traffic obtained in the time period meets the corresponding first duration-level traffic range.

As described above, the rule item includes the first duration-level traffic range. In this case, step 403 may be specifically: determining that the first duration-level traffic meets the first duration-level traffic range.

In an example, a specific process of determining whether the first duration-level traffic meets the first duration-level traffic range may be: The network device pre-stores a table of a mapping relationship between the sleep time period, a first traffic range, and the sleep object, as shown in Table 1. In this case, the network device checks, based on first duration-level traffic collected in a sleep time period, whether the first duration-level traffic is within a first duration-level traffic range corresponding to the sleep time period. If the first duration-level traffic is within the first duration-level traffic range corresponding to the sleep time period, the network device determines that the first duration-level traffic meets the first duration-level traffic range.

**Table 1 Table of the mapping relationship between the sleep time period, the first traffic range, and the sleep object**

| Sleep time period | Traffic range | Sleep object |
|---|---|---|
| Sleep time period 1 | First traffic range 1 | Sleep object 1 |
| Sleep time period 2 | First traffic range 2 | Sleep object 2 |
| ... | ... | ... |
| Sleep time period m | First traffic range m | Sleep object m |

In an example, after determining, based on Table 1, that first duration-level traffic collected in the sleep time period is within the corresponding first duration-level traffic range, the network device may continue to determine, based on Table 1, a sleep object corresponding to the first duration-level traffic range. The sleep objects may include sleep objects and a quantity thereof, for example, three switch boards or three switch chips. In this case, specifications and types of the switch boards are basically the same. Certainly, the sleep objects may further include specific switch boards or switch chips.

In an example, after determining that the first duration-level traffic collected in the sleep time period is within the corresponding first duration-level traffic range, the network device may determine the sleep object based on a mapping relationship between the sleep time period, the first duration-level traffic range, and the sleep object.

The action item in the first sleep policy indicates a sleep object corresponding to the first duration-level traffic range to sleep when it is determined that the first duration-level traffic in the sleep time period meets the first duration-level traffic range in the rule item.

Correspondingly, step 404 may be: controlling the sleep object corresponding to the first duration-level traffic range to sleep in the corresponding sleep time period.

In an example, the network device may determine, based only on the first duration-level traffic of the service chip, whether to sleep according to the first sleep policy. Refer to the foregoing descriptions. In another example, the network device may alternatively determine, based on the first duration-level traffic and the second duration-level traffic, whether to sleep according to the first sleep policy. Refer to the following descriptions.

(2) The traffic data of the service chip may include the first duration-level traffic and the second duration-level traffic, where duration corresponding to the first duration-level traffic is longer than duration corresponding to the second duration-level traffic. For example, the first duration-level traffic may be minute-level traffic or second-level traffic, and the second duration-level traffic may be millisecond-level traffic.

The rule item may include the first duration-level traffic range corresponding to the first duration-level traffic and the full-bandwidth traffic duration range corresponding to the second duration-level traffic.

In this case, the rule item indicates the network device to determine whether the first duration-level traffic meets the first duration-level traffic range, and whether duration corresponding to full-bandwidth traffic in the second duration-level traffic meets the full-bandwidth traffic duration range.

The full-bandwidth traffic is traffic corresponding to an event that the second duration-level traffic of the service chip reaches full bandwidth, and the duration corresponding to the full-bandwidth traffic is duration for which the second duration-level traffic of the service chip is the full bandwidth. For example, for a 100G service chip, full-bandwidth traffic of the 100G service chip is 100G, and millisecond-level full-bandwidth traffic lasts for 2 milliseconds. In this case, duration corresponding to the full-bandwidth traffic is 2 milliseconds.

Because an event of full-bandwidth traffic occasionally occurs, the event of full-bandwidth traffic may be referred to as an emergency.

In an example, each time an event of full-bandwidth traffic is detected, the network device may determine whether corresponding duration meets the full-bandwidth traffic duration range. In another example, the network device may alternatively select full-bandwidth traffic with longest duration from a plurality of pieces of full-bandwidth traffic detected in a time period, and determine, based on the duration of the full-bandwidth traffic, whether the full-bandwidth traffic duration range is met.

As described above, the rule item includes the first duration-level traffic range and the full-bandwidth traffic duration range. In this case, step 403 may be specifically: determining that the first duration-level traffic meets the first duration-level traffic range, and that the duration corresponding to the full-bandwidth traffic in the second duration-level traffic meets the full-bandwidth traffic duration range.

In an example, a specific process of determining that the duration corresponding to the full-bandwidth traffic in the second duration-level traffic meets the full-bandwidth traffic duration range may be: first determining, based on a size relationship between the second duration-level traffic and the full-bandwidth traffic, whether the full-bandwidth traffic exists; and then further determining whether the duration of the full-bandwidth traffic is within the full-bandwidth traffic duration range when it is determined that the full-bandwidth traffic exists. The full-bandwidth traffic duration range may be one range, or a plurality of ranges. If the full-bandwidth traffic duration range includes the plurality of ranges, a range in which the duration corresponding to the full-bandwidth traffic falls is determined.

The network device pre-stores a table of a mapping relationship between the sleep time period, the full-bandwidth traffic duration range, and the sleep object, as shown in Table 2. In this way, the network device checks, based on full-bandwidth traffic existing on a service chip in a sleep time period, whether duration corresponding to the full-bandwidth traffic is within a full-bandwidth traffic duration range corresponding to the sleep time period. If the duration corresponding to the full-bandwidth traffic is within the full-bandwidth traffic duration range corresponding to the sleep time period, it is determined that the duration corresponding to the full-bandwidth traffic in second duration-level traffic meets the full-bandwidth traffic duration range.

**Table 2 Table of the mapping relationship between the sleep time period, the full-bandwidth traffic duration range, and the sleep object**

| Sleep time period | Full-bandwidth traffic duration range | Sleep object |
|---|---|---|
| Sleep time period 1 | Full-bandwidth traffic duration range 1 | Sleep object 1 |
| Sleep time period 2 | Full-bandwidth traffic duration range 2 | Sleep object 2 |
| ... | ... | ... |
| Sleep time period n | Full-bandwidth traffic duration range n | Sleep object n |

In an example, after determining that the first duration-level traffic collected in the sleep time period is within the corresponding first duration-level traffic range, and the duration corresponding to the full-bandwidth traffic in the second duration-level traffic meets the full-bandwidth traffic duration range, the network device may first determine a sleep object based on the mapping relationship between the sleep time period, the first duration-level traffic range, and the sleep object in Table 1. Then, the network device further determines a sleep object based on the mapping relationship between the sleep time period, the full-bandwidth traffic duration range, and the sleep object in Table 2.

The sleep object determined based on Table 2 may be the same as the sleep object determined based on Table 1. If the sleep object determined based on Table 2 is the same as the sleep object determined based on Table 1, it indicates that the duration corresponding to the full-bandwidth traffic is short and may be ignored. A quantity of sleep objects determined based on Table 2 may alternatively be less than a quantity of sleep objects determined based on Table 1. This indicates that the duration corresponding to the full-bandwidth traffic is long and needs to be considered.

The action item in the first sleep policy indicates the sleep object corresponding to the first duration-level traffic range and the full-bandwidth traffic duration range to sleep when it is determined that the first duration-level traffic in the sleep time period meets the first duration-level traffic range in the rule item, and the duration corresponding to the full-bandwidth traffic in the second duration-level traffic meets the full-bandwidth traffic duration range in the rule item.

Correspondingly, step 404 may be: controlling the sleep object corresponding to the first duration-level traffic range and the full-bandwidth traffic duration range to sleep in the corresponding sleep time period.

It can be learned from the foregoing that the rule item in the first sleep policy is related to the full-bandwidth traffic, the event that the full-bandwidth traffic occurs is the emergency, and the first sleep policy considers the emergency. In this case, when the network device sleeps, it is ensured that network communication is not interrupted even if the emergency occurs, and power consumption reduction is maximized.

The foregoing describes a process of controlling the sleep object to sleep in the corresponding sleep time period in the solutions in which the measurement data includes the first duration-level traffic, and the measurement data includes the first duration-level traffic and the second duration-level traffic.

In some other examples, in addition to the traffic data, the measurement data may further include a current cache capacity of the service chip. In this case, the rule item may further include a second cache threshold, where the second cache threshold may be referred to as a cache capacity waterline. The rule item indicates the network device to determine whether the current cache capacity is less than the second cache threshold. In this case, step 403 may be specifically: determining that the current cache capacity meets the second cache threshold.

If the current cache capacity is a traffic value, the second cache threshold is also a traffic threshold. If the current cache capacity is a percentage of traffic to the maximum cache capacity, the second cache threshold is also a percentage.

The second cache threshold is a warning line of currently cached traffic. If the current cache capacity reaches the second cache threshold, the service chip has a risk of packet loss. The second cache threshold may be determined according to the following formula: Maximum cache duration ≥ (Wake-up waterline cache duration + Wake-up event detection duration + Wake-up duration) x (1 - Sleep bandwidth percentage)

In the foregoing formula, the maximum cache duration corresponds to the maximum cache capacity, and represents the cache capability of the service chip. Longer maximum cache duration indicates a larger maximum cache capacity of the service chip and a stronger cache capability of the service chip. The wake-up waterline cache duration is duration required for caching to the second cache threshold. The wake-up event detection duration is duration required for detecting a wake-up event. The wake-up duration is duration required for waking up the sleep object. The sleep bandwidth percentage is a percentage of bandwidth that does not sleep to total bandwidth of the switch board.

The wake-up waterline cache duration may be obtained according to the foregoing formula, and then the second cache threshold may be obtained by multiplying the wake-up waterline cache duration by a transmission rate of the service chip.

The action item indicates the sleep object corresponding to the traffic range to sleep when it is determined that the current cache capacity in the sleep time period meets the second cache threshold in the rule item, where the traffic range may be the first duration-level traffic range, or may include the first duration-level traffic range and the full-bandwidth traffic duration range.

Correspondingly, step 404 may be specifically: controlling the sleep object corresponding to the traffic range to sleep in the corresponding sleep time period.

In some other examples, in addition to the traffic data, the measurement data may further include a delay. The delay may be an actual delay recorded in a stage in which the network device does not execute the sleep policy, may be a delay requirement configured by a client that sends service data to the network device, or may be a default delay of the network device. In this case, the rule item may further include a delay threshold (which may be 1 millisecond for example), and the rule item indicates the network device to determine whether the delay is less than the delay threshold.

The action item indicates the sleep object corresponding to the traffic range to sleep when it is determined that the delay in the sleep time period meets the delay threshold in the rule item, in other words, when a delay of a current network device is less than the delay threshold. The traffic range may be the first duration-level traffic range, or may include the first duration-level traffic range and the full-bandwidth traffic duration range.

Correspondingly, step 404 may be specifically: controlling the sleep object corresponding to the traffic range to sleep in the corresponding sleep time period.

In some other examples, in addition to the traffic data, the measurement data may further include a quantity of packets lost due to congestion. In this case, the rule item may further include a threshold of the quantity of packets lost due to congestion. The rule item indicates the network device to determine whether the quantity of packets lost due to congestion is less than the threshold of the quantity of packets lost due to congestion. In this case, step 403 may be specifically: determining that the quantity of packets lost due to congestion meets the threshold of the quantity of packets lost due to congestion.

The action item indicates the sleep object corresponding to the traffic range to sleep when it is determined that the quantity of packets lost due to congestion in the sleep time period meets the threshold of the quantity of packets lost due to congestion in the rule item. The traffic range may be the first duration-level traffic range, or may include the first duration-level traffic range and the full-bandwidth traffic duration range.

Correspondingly, step 404 may be specifically: controlling the sleep object corresponding to the traffic range to sleep in the corresponding sleep time period.

In some other examples, in addition to the traffic data, the measurement data may further include network jitter. The network jitter may be understood as a delay variation degree. If the network jitter is large, it indicates that a delay variation is large and a delay is unstable. In this case, the rule item may further include a network jitter threshold. The rule item indicates the network device to determine whether the network jitter is less than the network jitter threshold. In this case, step 403 may be specifically: determining that the network jitter meets the network jitter threshold.

The action item indicates the sleep object corresponding to the traffic range to sleep when it is determined that the network jitter in the sleep time period meets the network jitter threshold in the rule item. The traffic range may be the first duration-level traffic range, or may include the first duration-level traffic range and the full-bandwidth traffic duration range.

Correspondingly, step 404 may be specifically: controlling the sleep object corresponding to the traffic range to sleep in the corresponding sleep time period.

Based on the foregoing descriptions, in the network device sleep control solution, not only the traffic data is considered, but also the delay, the current cache capacity, the delay, the quantity of packets lost due to congestion, the network jitter, and the like are considered. In this way, not only energy saving can be maximized during sleep, but also performance indicators such as the delay, the quantity of packets lost due to congestion, and the network jitter can be ensured, to achieve optimal matching between the maximized energy saving and network quality.

The foregoing describes a process of controlling the sleep objects to sleep in the corresponding sleep time period in the solution in which the sleep objects are the switch board and/or the switch chip. The following describes a solution of formulating the first sleep policy when the sleep objects include the switch board and/or the switch chip.

Table 1 and Table 2 are used to form the first sleep policy of the network device. The first sleep policy may be obtained from another device, for example, may be obtained from another network device of a same type. Alternatively, the first sleep policy may be formulated before the network device executes a sleep policy. In this case, used traffic is historical traffic. An example in which the first sleep policy is formulated before the network device executes the sleep policy may be used to determine a formulation process.

During formulation, the sleep time period is first determined. Then, a traffic range in each sleep time period is determined. For example, if the traffic data includes the first duration-level traffic, a first duration-level traffic range in each sleep time period is determined. For another example, if the traffic data includes the first duration-level traffic and the second duration-level traffic, a first duration-level traffic range and a full-bandwidth traffic duration range in each sleep time period are determined. Then, a corresponding sleep object is determined based on the traffic range.

### (a) Determining of the sleep time period

In an example, the sleep time period may be a time period entered by a person related to the network device. Because traffic of the network device is generated by people accessing the internet during work, study, and life, the sleep time period may be determined according to a life rule of the people.

For example, the person related to the network device may determine the sleep time period according to a life rule of people in an area in which the network device is located. Specifically, 24 hours of a day may be divided into N time periods, for example, a time period from 8:00 to 18:00, a time period from 18:00 to 22:00, and a time period from 22:00 to 8:00. The sleep time period may be determined based on traffic of the network device in each time period. For example, traffic in the time period from 22:00 to 8:00 is low. As an idle time period, the time period may be used as the sleep time period.

In another example, the sleep time period may alternatively be determined by the network device based on historical traffic. For example, the network device may determine a time period in which the historical traffic is less than a traffic threshold and duration exceeds a duration threshold as the sleep time period.

A manner of determining the sleep time period is not limited in this embodiment, and may be flexibly selected.

### (b) Determining of the traffic range

In an example, the traffic range may be determined by the person related to the network device, or may be determined by the network device. Specifically, if the traffic range includes the first duration-level traffic range, a formulation process is as follows. The network device may fully run for a time period, and the time period includes a plurality of sleep time periods. For example, the time period may be several weeks, and each week includes a plurality of sleep time periods. Full running means that the network device has no sleep object. In this period, candidate first duration-level traffic ranges of service chips in a sleep time period are first obtained, and then a first duration-level traffic range is determined through comprehensive consideration of these candidate first duration-level traffic ranges.

For example, if first duration-level traffic ranges of most or even all service chips in the sleep time period are between Q1 and Q2, Q1 to Q2 may be determined as the first duration-level traffic range corresponding to the sleep time period. For another example, a union set of the plurality of candidate first duration-level traffic ranges may be used as the first duration-level traffic range. For another example, an average traffic range of the plurality of candidate first duration-level traffic ranges may alternatively be used as the first duration-level traffic range.

If the traffic range includes the first duration-level traffic range and the full-bandwidth traffic duration range in the second duration-level traffic, for determining of the first duration-level traffic range, refer to the foregoing descriptions, and a formulation process of the full-bandwidth traffic duration range is similar to the foregoing descriptions. For example, in a full running stage, the network device first obtains second duration-level historical traffic of each service chip in a sleep time period, and then determine whether full-bandwidth traffic exists in the second duration-level historical traffic in the sleep time period is determined. If the full-bandwidth traffic exists, the network device records duration of the full-bandwidth traffic. Then, a full-bandwidth traffic duration range in the sleep time period is determined based on the duration of the full-bandwidth traffic. For example, if an event of full-bandwidth traffic exists, values near duration corresponding to the full-bandwidth traffic may be used as the full-bandwidth traffic duration range. For another example, if a plurality of events of full-bandwidth traffic exist, a full-bandwidth traffic duration range may be determined based on shortest duration and longest duration.

### (c) Determining of the sleep object

In an example, the sleep object may be determined by the person related to the network device, or may be determined by the network device. Specifically, if the traffic range includes the first duration-level traffic range, a formulation process is as follows. The sleep object may be determined based on a relationship between a load rate of the network device and a usage rate of the switch board. The load rate may be represented by a percentage of the first duration-level traffic in the first duration-level traffic range to the full-bandwidth traffic. For example, a quantity of switch boards is 8. When the first duration-level traffic is lower than 20% of the full-bandwidth traffic, theoretically, only two of the eight switch boards can meet a bandwidth requirement of the network device. In this case, sleep objects corresponding to the first duration-level traffic range in which 20% is located may be six switch boards. Alternatively, if each switch board includes two switch chips, the sleep objects may be 12 switch chips.

If the traffic range further includes the full-bandwidth traffic duration range, based on that longer duration of the full-bandwidth traffic indicates a higher bandwidth requirement of the network device, a sleep object corresponding to the full-bandwidth traffic duration range may be determined by appropriately subtracting a specific quantity of sleep objects from sleep objects determined based on the first duration-level traffic range.

It should be noted that, because the delay, the quantity of packets lost due to congestion, and the network jitter are considered when the first sleep policy is executed, these parameters also need to be considered when the first sleep policy is formulated. For example, on the basis of the sleep objects formulated based on the traffic data, a sleep object may be reduced based on the foregoing parameters, to provide a specific margin for working of the switch board. For example, the network device may pre-store a correspondence between the delay threshold and a variation of the sleep object, a correspondence between the threshold of the quantity of packets lost due to congestion and the variation of the sleep object, and a correspondence between the network jitter threshold and the variation of the sleep object, and determine a corresponding variation of the sleep object based on the foregoing correspondences.

The foregoing is the solution in which the sleep objects include the switch board and/or the switch chip. The following describes a solution in which the sleep objects include the switch port.

### (II) The sleep objects include the switch port.

As described above, the switch port is an interface component that is of the switch chip and that is used for communication with the service chip. In this case, the switch port and the service chip are in one-to-one correspondence. In this case, whether the switch port can be used as the sleep object depends on the traffic data and the cache capability of the corresponding service chip. The traffic data may include the foregoing first duration-level traffic and the foregoing second duration-level traffic, and the duration of the first duration-level traffic is longer than the duration of the second duration-level traffic.

(1) The maximum cache capacity of the service chip is greater than a first cache threshold, the first duration-level traffic of the service chip is less than a first traffic threshold (the first traffic threshold is a first duration-level traffic threshold), and the duration of the full-bandwidth traffic in the second duration-level traffic is less than first full-bandwidth duration. In this case, the switch port corresponding to the service chip may be used as the sleep object.

The service chip may also be understood as that a cache capacity of the service chip is normally large, the first duration-level traffic of the service chip is not excessively large, and the duration of the full-bandwidth traffic in the second duration-level traffic is not excessively long (which may even be 0, where 0 indicates that no full-bandwidth traffic exists). In this case, the switch port corresponding to the service chip may be used as the sleep object.

In this case, the rule item in the first sleep policy may include the first traffic threshold, the first full-bandwidth duration, and the first cache threshold. The rule item indicates the network device to determine whether the first duration-level traffic of the service chip is less than the first traffic threshold, whether the duration of the full-bandwidth traffic in the second duration-level traffic is less than the first full-bandwidth duration, and whether the maximum cache capacity is greater than the first cache threshold.

The first duration-level traffic may be any first duration-level traffic of the service chip in the sleep time period. For example, each time a piece of first duration-level traffic is obtained, the first duration-level traffic is determined according to the rule item. The full-bandwidth traffic in the second duration-level traffic may be any full-bandwidth traffic of the service chip in the sleep time period. For example, each time a piece of full-bandwidth traffic is obtained, the full-bandwidth traffic is determined according to the rule item.

Correspondingly, step 403 may be specifically: determining that the first duration-level traffic of the service chip meets the first traffic threshold, the duration of the full-bandwidth traffic in the second duration-level traffic meets the first full-bandwidth duration, and the maximum cache capacity meets the first cache threshold. The duration of the full-bandwidth traffic in the second duration-level traffic may be 0, where 0 indicates that no full-bandwidth traffic exists.

The action item in the first sleep policy indicates the switch port corresponding to the service chip to sleep when it is determined that the first duration-level traffic of the service chip in the sleep time period meets the first traffic threshold in the rule item, the duration of the full-bandwidth traffic in the second duration-level traffic meets the first full-bandwidth duration in the rule item, and the maximum cache capacity meets the first cache threshold.

Correspondingly, step 404 may be specifically: controlling the switch port corresponding to the service chip to sleep in the corresponding sleep time period.

(2) The maximum cache capacity of the service chip is less than a first cache threshold, but the first duration-level traffic of the service chip is less than a second traffic threshold (the second traffic threshold is a traffic threshold of the first duration-level traffic), and the duration of the full-bandwidth traffic in the second duration-level traffic is less than second full-bandwidth duration. In this case, the switch port corresponding to the service chip may also be used as the sleep object.

The service chip may also be understood as that the maximum cache capacity of the service chip is small, and theoretically can limit sleep of the switch port corresponding to the service chip. However, the first duration-level traffic of the service chip is excessively small, and the duration of the full-bandwidth traffic in the second duration-level traffic is also excessively short (which may even be 0, where 0 indicates that no full-bandwidth traffic exists). In this case, the switch port corresponding to the service chip may also be used as the sleep object.

In this case, the rule item in the first sleep policy may include the second traffic threshold, the second full-bandwidth duration, and the first cache threshold. The rule item indicates the network device to determine whether the first duration-level traffic of the service chip is less than a second duration-level traffic threshold, whether the duration of the full-bandwidth traffic in the second duration-level traffic is less than the second full-bandwidth duration, and whether the maximum cache capacity is less than the first cache threshold.

The first duration-level traffic may be any first duration-level traffic of the service chip in the sleep time period. For example, each time a piece of first duration-level traffic is obtained, the first duration-level traffic is determined according to the rule item. The full-bandwidth traffic in the second duration-level traffic may be any full-bandwidth traffic of the service chip in the sleep time period. For example, each time a piece of full-bandwidth traffic is obtained, the full-bandwidth traffic is determined according to the rule item.

Correspondingly, step 403 may be specifically: determining that the first duration-level traffic of the service chip meets the second traffic threshold, the duration of the full-bandwidth traffic in the second duration-level traffic meets the second full-bandwidth duration, and the maximum cache capacity meets the first cache threshold. The duration of the full-bandwidth traffic in the second duration-level traffic may be 0, where 0 indicates that no full-bandwidth traffic exists.

The action item in the first sleep policy indicates the switch port corresponding to the service chip to sleep when it is determined that the first duration-level traffic of the service chip in the sleep time period meets the second traffic threshold in the rule item, the duration of the full-bandwidth traffic in the second duration-level traffic meets the second full-bandwidth duration in the rule item, and the maximum cache capacity meets the first cache threshold.

Correspondingly, step 404 may be specifically: controlling the switch port corresponding to the service chip to sleep in the corresponding sleep time period.

It should be noted that, because the first traffic threshold in (1) is used to determine that the first duration-level traffic is not excessively large, and the second traffic threshold in (2) is used to determine that the first duration-level traffic is excessively small, the first traffic threshold is greater than or equal to the second traffic threshold. Similarly, because the first full-bandwidth duration in (1) is used to determine that the duration of the full-bandwidth traffic is not excessively long, and the second full-bandwidth duration in (2) is used to determine that the duration of the full-bandwidth traffic is excessively short, the first full-bandwidth duration is longer than or equal to the second full-bandwidth duration.

It should be noted that, in the solution of determining the switch port corresponding to the service chip after the service chip that meets a requirement is determined based on the maximum cache capacity of the service chip, the first duration-level traffic, and the duration of the full-bandwidth traffic in the second duration-level traffic, the network device may obtain a traffic topology, and search for the corresponding switch port by using the traffic topology. The traffic topology is a traffic path between the switch chip and the service chip. The traffic topology includes the switch port and the service port (to be specific, a port that is on the service chip and that is used for communication with the switch chip), so that the switch port corresponding to the service chip can be determined.

The foregoing describes a process of controlling the sleep object to sleep in the corresponding sleep time period in the solution in which the sleep objects include the switch port. The following describes a solution of formulating the first sleep policy when the sleep objects include the switch port.

Similarly, the first sleep policy may be obtained from another device, for example, may be obtained from another network device of a same type. Alternatively, the first sleep policy may be formulated before the network device executes a sleep policy. In this case, used traffic is historical traffic. An example in which the first sleep policy is formulated before the network device executes the sleep policy may be used to determine a formulation process.

Similarly, during formulation, the sleep time period is first determined. Then, first duration-level traffic and second duration-level traffic of the service chip in each sleep time period are determined, and then based on the first duration-level traffic and the second duration-level traffic of the service chip, it is determined whether the switch port corresponding to the service chip can sleep.

For determining of the sleep time period, refer to the foregoing descriptions. Details are not described herein again.

First, the first cache threshold is used to determine the cache capability of the service chip. If the maximum cache capacity of the service chip is greater than the first cache threshold, determining is performed based on the following (i). If the maximum cache capacity of the service chip is less than the first cache threshold, determining is performed based on the following (ii).

(i) First, the first duration-level traffic of the service chip is used for determining. The network device may obtain first duration-level traffic of each service chip in each sleep time period. For example, the network device may obtain the first duration-level traffic of the service chip in the sleep time period by obtaining first duration-level traffic of each physical interface corresponding to the service chip in the sleep time period.

There are a plurality of pieces of first duration-level traffic of the service chip in the sleep time period, and a largest piece of first duration-level traffic among the plurality of pieces of first duration-level traffic may be compared with the first traffic threshold. Alternatively, a piece of average traffic of the plurality of pieces of first duration-level traffic may be compared with the first traffic threshold. If a result is that the first duration-level traffic is not less than the first traffic threshold, the service chip cannot be used as the sleep object. If the result is that the first duration-level traffic is less than the first traffic threshold, the second duration-level traffic continues to be used for determining.

Then, the second duration-level traffic is used for determining. The network device may obtain second duration-level traffic of each service chip in each sleep time period. For example, the network device may obtain the second duration-level traffic of the service chip in the sleep time period by obtaining second duration-level traffic of each physical interface corresponding to the service chip in the sleep time period. The network device continues to determine whether the full-bandwidth traffic exists in the second duration-level traffic of the service chip. If the full-bandwidth traffic does not exist, the service chip may be used as the sleep object. If the full-bandwidth traffic exists, the network device continues to determine a relationship between the duration corresponding to the full-bandwidth traffic and the first full-bandwidth duration. If the duration corresponding to the full-bandwidth traffic is less than the first full-bandwidth duration, the service chip may be used as the sleep object. Otherwise, the service chip cannot be used as the sleep object. The duration corresponding to the full-bandwidth traffic may be longest duration of at least one piece of full-bandwidth traffic, or may be an average value of all duration of the at least one piece of full-bandwidth traffic.

A determination process of (ii) is similar to that of (i). First, the first duration-level traffic of the service chip is used for determining. The network device may obtain first duration-level traffic of each service chip in each sleep time period. For example, the network device may obtain the first duration-level traffic of the service chip in the sleep time period by obtaining first duration-level traffic of each physical interface corresponding to the service chip in the sleep time period.

There are a plurality of pieces of first duration-level traffic of the service chip in the sleep time period, and a largest piece of first duration-level traffic among the plurality of pieces of first duration-level traffic may be compared with the second traffic threshold. Alternatively, a piece of average traffic of the plurality of pieces of first duration-level traffic may be compared with the second traffic threshold. If a result is that the first duration-level traffic is greater than the second traffic threshold, the service chip cannot be used as the sleep object. If the result is that the first duration-level traffic is less than the second traffic threshold, the second duration-level traffic continues to be used for determining.

Then, the second duration-level traffic is used for determining. The network device may obtain second duration-level traffic of each service chip in each sleep time period. For example, the network device may obtain the second duration-level traffic of the service chip in the sleep time period by obtaining second duration-level traffic of each physical interface corresponding to the service chip in the sleep time period. The network device continues to determine whether the full-bandwidth traffic exists in the second duration-level traffic of the service chip. If the full-bandwidth traffic does not exist, the service chip may be used as the sleep object. If the full-bandwidth traffic exists, the network device continues to determine a relationship between the duration corresponding to the full-bandwidth traffic and the second full-bandwidth duration. If the duration corresponding to the full-bandwidth traffic is less than the second full-bandwidth duration, the service chip may be used as the sleep object. Otherwise, the service chip cannot be used as the sleep object. The duration corresponding to the full-bandwidth traffic may be longest duration of at least one piece of full-bandwidth traffic, or may be an average value of all duration of the at least one piece of full-bandwidth traffic.

The foregoing is the solutions in which the sleep objects are the switch board and/or the switch chip, and in which the sleep objects are the switch port. During application, the sleep objects may include the switch board, the switch chip, and the switch port. For example, the network device may first determine, based on (I), how many switch boards can sleep, and then determine, based on (II), whether the switch port corresponding to the service chip can sleep. For example, the network device includes eight switch boards, and it is determined, based on (I), that four switch boards can sleep, and then a service chip is determined based on (II). Because first duration-level traffic of the service chip is large or full-bandwidth duration in second duration-level traffic is long, a switch port corresponding to the service chip cannot sleep. All service chips and all switch chips have an electrical connection relationship. In this case, switch ports that are on all switch boards and that are used for communication with the service chip cannot sleep.

In an example, because the network device sleeps by using the switch port as the granularity and the switch port is a minimum sleep granularity, the sleep object may be directly determined based on (II) when the network device is controlled to sleep.

In an example, for the service chip, the maximum cache capacity of the service chip is normally large, but the first duration-level traffic is large, or the duration of the full-bandwidth traffic in the second duration-level traffic is long. Switch ports communicating with the service chip may be all in the non-sleep state, or may be partially in the non-sleep state. This mainly depends on how large the first duration-level traffic is, or how long the duration of the full-bandwidth traffic is. If the first duration-level traffic is excessively large or the duration of the full-bandwidth traffic is excessively long, the switch ports are all in the non-sleep state. Otherwise, the switch ports may be partially in the non-sleep state.

Similarly, for the service chip, the maximum cache capacity of the service chip is small, but the first duration-level traffic is not excessively small, or the duration of the full-bandwidth traffic in the second duration-level traffic is not excessively short. Switch ports communicating with the service chip may be all in the non-sleep state, or may be partially in the non-sleep state. This mainly depends on how large the first duration-level traffic is, or how long the duration of the full-bandwidth traffic is. If the first duration-level traffic is large or the duration of the full-bandwidth traffic is long, the switch ports are all in the non-sleep state. Otherwise, the switch ports may be partially in the non-sleep state.

For example, in a possible scenario, an example in which the network device includes eight switch boards is still used, and it is determined, based on (I), that two switch boards can sleep. It is determined, based on (II), that a maximum cache capacity of a service board A is normally large, but first duration-level traffic is large, yet not large enough to enable all switch ports to sleep. In this case, switch ports that are of the two sleeping switch boards and that correspond to the service board A may be in the sleep state, and the other six switch boards are all in the non-sleep state for the service board A. A maximum cache capacity of a service board B is normally large, but first duration-level traffic is large, yet not large enough to enable all the switch ports to sleep. In this case, the switch ports that are of the service board A and that correspond to the two sleeping switch boards may be in the sleep state. For the service board A, in the other six switch boards, two switch boards may also be in the sleep state, and only four switch boards are in the non-sleep state.

No matter whether the sleep object is the switch board, the switch chip, or the switch port, sleep control is performed for the switch board of the network device. When the switch board (for example, the entire switch board, the switch chip, or the switch port) is in the sleep state, some components that are of the service board and that communicate with the switch board (for example, the entire switch board, the switch chip, or the switch port) may also be in the sleep state.

In this case, a corresponding sleep object includes a first sleep object and a second sleep object, where the first sleep object is at least one of the entire switch board, the switch chip, and the switch port, and the second sleep object includes a component that is of the service board and that communicates with the first sleep object.

For example, if the entire switch board is in the sleep state, the entire switch board is the first sleep object, and an interface component that is of the service board and that is used to communicate with the switch board is the second sleep object. For example, if a Serdes of the service board is connected to the switch board, a Serdes that is of the service board and that is used to connect to the switch board in the sleep state may be in the sleep state.

For another example, if the switch chip is in the sleep state, the switch chip is used as the first sleep object, and an interface component that is of the service chip and that is used to communicate with the switch chip is the second sleep object. For example, if a Serdes of the service chip is connected to the switch chip, a Serdes that is of the service chip and that is used to connect to the switch chip in the sleep state may be in the sleep state.

For another example, if the switch port is in the sleep state, to be specific, a switch port corresponding to a service chip is in the sleep state, the switch port is used as the first sleep object, and an interface component that is of the service chip and that is connected to the first sleep object is the second sleep object. If the switch port is a Serdes, a Serdes that is of the service chip and that is used to connect to the Serdes is also in the sleep state.

That the Serdes is in the sleep state may be understood as that the Serdes is disabled.

In this way, not only the switch board (for example, the entire switch board, the switch chip, or the switch port) of the network device is controlled to sleep, but also some components of the service board that are used to communicate with the switch board (for example, the entire switch board, the switch chip, or the switch port) are controlled to sleep, so that power consumption of the network device is reduced to a greater extent.

Unless otherwise specified, all sleep objects described below refer to the first sleep object.

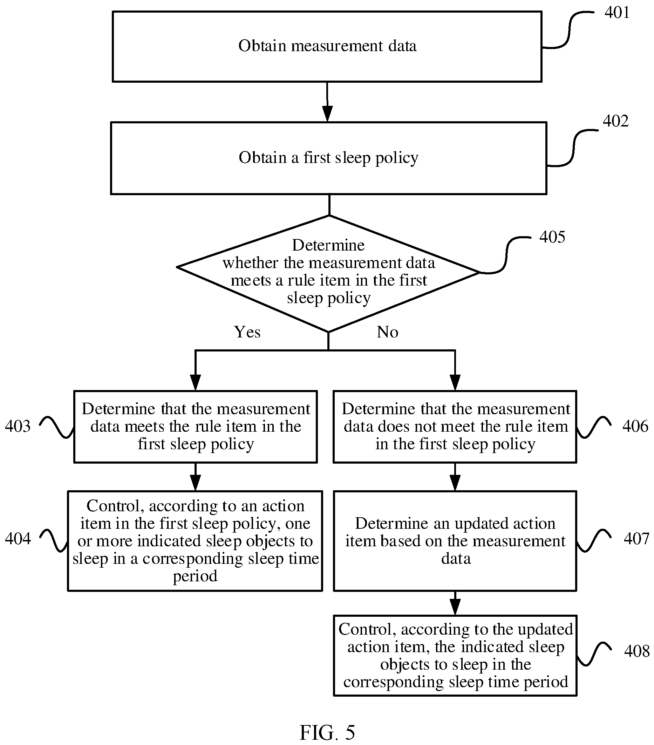

The foregoing describes a solution in which the sleep object is controlled to sleep in the corresponding sleep time period when it is determined that the measurement data meets the rule item in the first sleep policy. When the determined measurement data does not meet the rule item in the first sleep policy, the following solution is performed according to a procedure shown in FIG. 5.

After the first sleep policy is obtained in step 402, step 405 is performed to determine whether the measurement data meets the rule item in the first sleep policy. For a specific determining process, refer to the foregoing descriptions. Details are not described herein again. If the measurement data meets the rule item in the first sleep policy, step 403 and step 404 are performed in sequence. For a specific process, refer to the foregoing descriptions. Details are not described herein again. If the measurement data does not meet the rule item in the first sleep policy, step 406 is performed.

In step 406, it is determined that the measurement data does not meet the rule item in the first sleep policy.

For example, if the sleep object includes a switch board and/or a switch chip, the measurement data includes the traffic data, and correspondingly, the rule item includes a traffic data range. Determining that the measurement data does not meet the rule item means determining that the traffic data does not meet the traffic range. For example, the traffic data includes first duration-level traffic, and the rule item includes a first duration-level traffic range. Step 406 may include determining that the first duration-level traffic does not meet the first duration-level traffic range. For another example, the traffic data includes first duration-level traffic and second duration-level traffic, and the rule item includes a first duration-level traffic range and a full-bandwidth traffic duration range. Step 406 may include determining that the first duration-level traffic does not meet the first duration-level traffic range, or determining that duration corresponding to full-bandwidth traffic in the second duration-level traffic does not meet the full-bandwidth traffic duration range.

For another example, the measurement data includes a current cache capacity, and correspondingly, the rule item includes a second cache threshold. Step 406 may include determining that the current cache capacity is not less than the second cache threshold.

For another example, the measurement data includes a delay, and correspondingly, the rule item includes a delay threshold. Step 406 may include determining that the delay is not less than the delay threshold.

For another example, the measurement data includes a quantity of packets lost due to congestion, and correspondingly, the rule item includes a threshold of the quantity of packets lost due to congestion. Step 406 may include determining that the quantity of packets lost due to congestion is not less than the threshold of the quantity of packets lost due to congestion.

For another example, the measurement data includes network jitter, and correspondingly, the rule item includes a network jitter threshold. Step 406 may include determining that the network jitter is not less than the network jitter threshold.

For another example, if the sleep object includes a switch port, the measurement data includes the traffic data and the maximum cache capacity, and the traffic data includes the first duration-level traffic and the second duration-level traffic. Correspondingly, in a case, the rule item includes a first traffic threshold, first full-bandwidth duration, and a cache threshold. Step 406 may include determining at least one of the following cases: that the first duration-level traffic is not less than the first traffic threshold, that the duration corresponding to the full-bandwidth traffic in the second duration-level traffic is not less than the first full-bandwidth duration, and that the maximum cache capacity is greater than the first cache threshold. In another case, the rule item includes a second traffic threshold, second full-bandwidth duration, and a cache threshold. Step 406 may include determining at least one of the following cases: that the first duration-level traffic is not less than the second traffic threshold, that the duration corresponding to the full-bandwidth traffic in the second duration-level traffic is not less than the second full-bandwidth duration, and that the maximum cache capacity is not less than the first cache threshold.

In step 407, an updated action item is determined based on the measurement data.

In an example, if the sleep object includes the switch board and/or the switch chip, an updated sleep object may be re-determined based on the first duration-level traffic in the traffic data, Table 1, the duration corresponding to the full-bandwidth traffic in the second duration-level traffic, and Table 2. The action item indicates the sleep object to sleep in a corresponding sleep time period, and if the sleep object is updated, the action item is also updated. Therefore, the updated action item is determined based on the measurement data.

If the sleep objects include the switch port, the sleep objects may be updated in the foregoing manner of determining the sleep objects. In other words, the action item is updated.

If the measurement data includes the current cache capacity, the sleep object may be appropriately reduced based on the current cache capacity. A correspondence between the cache capacity and the sleep object may be pre-stored, and the updated sleep object is determined based on the correspondence.

If the measurement data includes the delay, the sleep object may be appropriately reduced based on the delay threshold. A correspondence between the delay threshold and the sleep object may be pre-stored, and the updated sleep object is determined based on the correspondence.

If the measurement data includes the quantity of packets lost due to congestion, the sleep object may be appropriately reduced based on the threshold of the quantity of packets lost due to congestion. A correspondence between the threshold of the quantity of packets lost due to congestion and the sleep object may be pre-stored, and the updated sleep object is determined based on the correspondence.

In step 408, the indicated sleep objects are controlled, according to the updated action item, to sleep in the corresponding sleep time period.

In an example, the network device may use the updated action item at a current stage to control the indicated sleep object to sleep in the corresponding sleep time period. For example, the network device periodically performs steps shown in FIG. 5. In this case, the network device may perform step 408 in a current periodicity. In a subsequent periodicity, the network device may control, according to the updated action item, the sleep object to sleep in the corresponding sleep time period, or may continue to execute the first sleep policy.

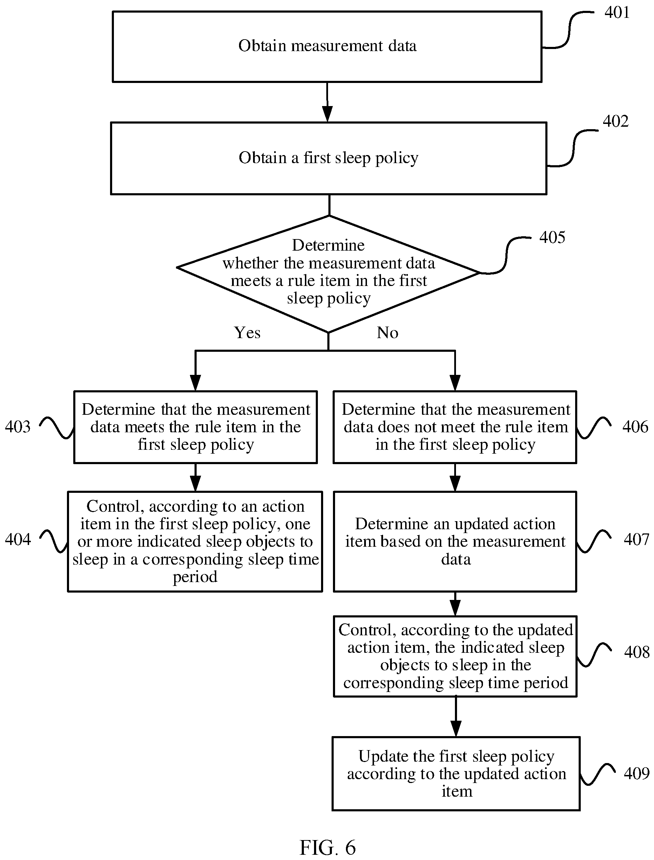

In an example, the network device may also perform step 408 in a subsequent stage. For example, the network device not only performs step 408 in the current periodicity, but also performs step 408 in the subsequent periodicity. Correspondingly, refer to FIG. 6.

In step 409, the first sleep policy is updated according to the updated action item.

In an example, after the first sleep policy is updated, the network device may subsequently control, according to an updated first sleep policy, the sleep object to sleep in the corresponding sleep time period. In this way, the first sleep policy is dynamically adjusted based on the obtained measurement data, so that subsequently obtained measurement data can meet a rule item in the updated first sleep policy. In this way, sleep of the network device can be controlled to maximize power consumption reduction.

Step 407 is performed after step 406. In some other examples, after step 406, a wake-up action may alternatively be performed, for example, a full wake-up operation may be performed. Partial wake-up may be understood as updating of the sleep object in step 407.

It should be noted that, when the first sleep policy is updated, measurement data used in formulation of a previous first sleep policy and current measurement data may be considered. The previous first sleep policy may be all previous first sleep policies, or may be a first sleep policy in a recent time period.

It should be noted that, when the measurement data obtained in step 401 is different from the previous measurement data, but still meets the condition in the rule item, the first sleep policy may continue to be executed, and the first sleep policy is not updated. However, to make the first sleep policy more adapt to a traffic change of the network device, correspondingly, even if a condition for updating the first sleep policy is not triggered within a time period, a sleep policy may still be re-determined based on collected historical measurement data. The re-determined sleep policy may remain unchanged or may change. The historical measurement data may be all measurement data before current time, or may be measurement data in the recent time period.

For example, the network device periodically performs the foregoing method, and detects that duration (which may be longest duration) of full-bandwidth traffic of second duration-level traffic in recent consecutive M (where for example, one week is used as a periodicity, and M may be 3 or 4) periodicities decreases. In this case, a sleep policy may be re-formulated based on first duration-level traffic and the duration of the full-bandwidth traffic in the second duration-level traffic of the M, to replace the original first sleep policy.

In the foregoing, the corresponding sleep object is controlled to sleep in the sleep time period. In this case, when the sleep time period ends, the corresponding sleep object may be woken up. Waking up the sleep object may occur not only when the sleep time period ends, but also when the network device detects a wake-up event.

For example, the method may further include: waking up all or a part of sleep objects when the sleep object is in a sleep state and the wake-up event is detected, where

the wake-up event includes at least one of the following: a current cache capacity of at least one service chip reaches the second cache threshold, and a hardware configuration of the network device changes, where the hardware configuration change includes at least one of the following: a service board is newly added, and a fault occurs on an object in a non-sleep state.

In an example, if the current cache capacity reaches the second cache threshold, it indicates that an amount of data cached by a current service chip is large. If all or the part of the sleep objects are not woken up, a packet loss event may occur. Therefore, the sleep object needs to be woken up in time.

In an example, when the service board is newly added, because the network device cannot read traffic data and a maximum cache capacity of each service chip in the newly inserted service board, the newly added service board may affect the first sleep policy, and it is possible that the traffic data does not meet the rule item in the first sleep policy and sleep cannot be performed. Therefore, the sleep object needs to be woken up.

In an example, if the fault occurs on the object in the non-sleep state, such as a switch board, a switch chip, or a switch port, a processing capability of the switch board is weakened, and a packet loss event may occur. Therefore, the sleep object needs to be woken up in time.

In an example, when the wake-up event is the newly added service board, because the network device cannot read historical traffic data and a maximum cache capacity of the newly added service board, recording needs to be performed for a time period. Correspondingly, the method may further include: first controlling the network device to work in the non-sleep state for preset duration, and then determining a second sleep policy based on traffic of the service chip in the preset duration, where the second sleep policy is used to replace the first sleep policy.

In an example, if the traffic data and the maximum cache capacity of each service chip in the newly added service board do not affect the first sleep policy, the second sleep policy is the same as the first sleep policy; and if traffic data or a maximum cache capacity of at least one service chip in the newly added service board affects the first sleep policy, the second sleep policy is different from the first sleep policy.

In an example, the wake-up event may not only include at least one of the foregoing events, but also include that full-bandwidth traffic exists in second duration-level traffic of a service chip, and duration corresponding to the full-bandwidth traffic reaches or exceeds maximum full-bandwidth duration, where the maximum full-bandwidth duration may be maximum duration in a historical record, may be preset duration, or may be maximum duration involved when the first sleep policy is formulated. Theoretically, that the current cache capacity reaches the second cache threshold is already used as the wake-up event. In this case, the full-bandwidth traffic in the second duration-level traffic may not be used as the wake-up event, because if the duration corresponding to the full-bandwidth in the second duration-level traffic is long, the wake-up event that the current cache capacity reaches the second cache threshold is to be triggered definitely. However, that the current cache capacity reaches the second cache threshold is used as the wake-up event, which can further reduce or even avoid the packet loss event.

In some other examples, the wake-up event may further include a case in which a failure mode and effects analysis (failure mode and effects analysis, FMEA) detection module of the network device detects a fault (where for example, the fault may occur on a non-sleep switch board).

In some other examples, the wake-up event may further include that an ambient temperature of the network device is excessively high, for example, exceeds 40°C. Considering that the ambient temperature is excessively high, time required for waking up the sleep object may be long, and the packet loss event occurs when the wake-up is not performed in time. Therefore, the wake-up event may include that the ambient temperature reaches 40°C.

It can be learned that, according to the method, when the network device is controlled to sleep, the sleep object is woken up in time when the wake-up event is detected, so that packet loss can be reduced.

To quickly wake up the sleep object, a wake-up operation may be performed by a processor of the service board. Compared with performing by a processor of a main control board, time required for the processor of the service board to perform the wake-up operation is shorter. Therefore, the wake-up is more timely, and the packet loss is further reduced and even avoided.

In addition, as described above, when the first sleep object sleeps, the second sleep object communicating with the first sleep object is also controlled to sleep. In this case, when the first sleep object in the sleep state performs the wake-up operation, the second sleep object communicating with the first sleep object also performs the wake-up operation.

It should be noted that, the foregoing wake-up may be partial wake-up, or may be full wake-up, and the partial wake-up may be step-shaped wake-up. For example, a part of the sleep objects is first woken up, and if the wake-up event is still detected, another part of the sleep objects are continuously woken up until all of the sleep objects are woken up. Alternatively, if the wake-up event is still detected after several times (for example, two times) of wake-up, full wake-up is performed.

In an example, when the network device executes the sleep policy, power consumption of the network device is low. In this case, generated heat is also reduced, and correspondingly, heat dissipation strength of the network device may be reduced. The network device may pre-store a correspondence between the sleep object and a heat dissipation policy. In this case, in the sleep time period, the heat dissipation system of the network device may be controlled to dissipate heat according to the heat dissipation policy corresponding to the sleep object in the sleep time period.

Similarly, when the wake-up event is detected, the sleep object changes. In this case, the heat dissipation system may be controlled, based on the correspondence between the sleep object and the heat dissipation policy, to dissipate heat according to a heat dissipation policy corresponding to a remaining sleep object after wake-up.

As described above, the heat dissipation policy of the heat dissipation system is dynamically adjusted with the sleep object, and the adjustment of the heat dissipation policy may include at least one of adjusting a quantity of fans turned on and adjusting a rotation speed of a fan in a turn-on state. For example, when the sleep object decreases, the quantity of fans turned on may be increased, and/or the rotation speed of the fan in the turn-on state may be increased.

The foregoing dynamically adjusting the heat dissipation policy of the heat dissipation system based on the sleep object not only provides heat dissipation for the network device, but also further reduces power consumption of the network device.

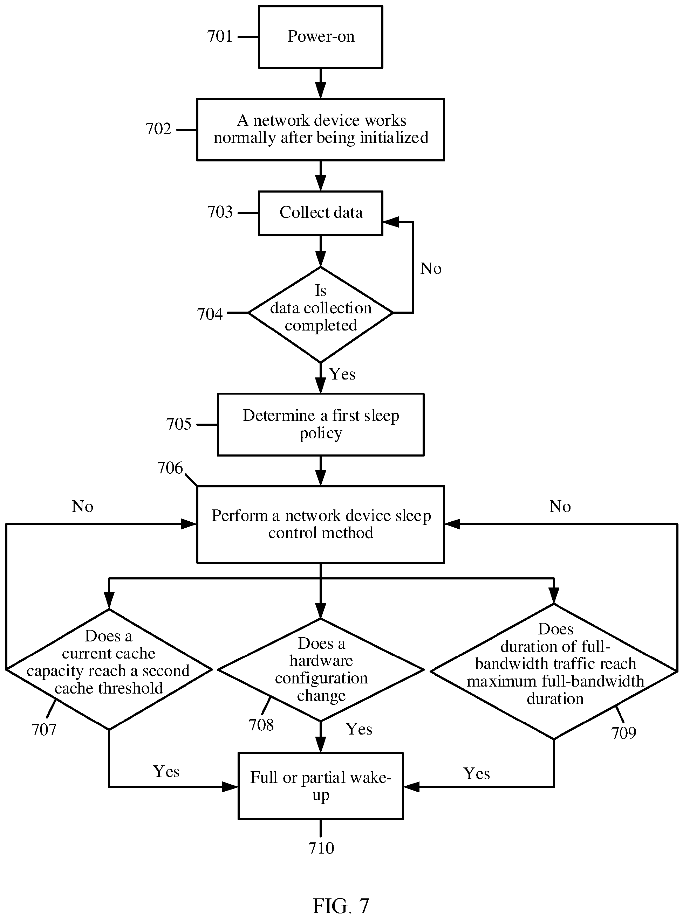

Refer to FIG. 7. Based on the foregoing descriptions, an example in which the network device formulates the first sleep policy by collecting data is used to describe a process in which the network device formulates the sleep policy and executes the sleep policy. In step 701, a network device is powered on. In step 702, the network device works normally after being initialized. For example, a main control board, a service board, and a switch board of the network device all work normally. In step 703, data is collected. For example, a hardware configuration is collected, for example, a quantity of switch boards, a quantity of switch chips included in each switch board, and a maximum cache capacity of each service chip. For another example, the collected data includes traffic-related data, such as first duration-level traffic and second duration-level traffic of the service chip, duration of full-bandwidth traffic in the second duration-level traffic, a second cache threshold (which may also be referred to as a cache capacity waterline) of the service chip, a delay, and a quantity of packets lost due to congestion. For another example, the collected data may further include data related to a working environment of the network device, such as an ambient temperature and a working temperature of the service chip.

During the foregoing data collection, the network device is in a full running state, to be specific, all active switch boards normally perform forwarding work, and all standby switch boards are powered on and in a non-sleep state. The collected data is used by the network device to formulate a sleep policy.

In step 704, it is determined whether the data collection is completed. For example, whether the data collection is completed may be determined by using preset duration. For another example, whether the data collection is completed is determined by determining whether the collected data is stable. For example, data at same time points in different collection periodicities is not much different, that is, stable. A specific piece of data collected at a time point today, is not much different from data collected at a same time point yesterday, and is within a preset range. If the data collection is not completed, step 703 continues to be performed until the data collection is completed, and then step 705 is performed.

In step 705, a first sleep policy is determined. For example, the first sleep policy is executed based on the collected data.

In step 706, a network device sleep control method is performed. For example, according to the procedure shown in FIG. 6, the network device is controlled to sleep. In step 706, the network device further dynamically adjusts a heat dissipation policy of a heat dissipation system according to the current sleep policy, for example, adjusts a quantity of fans turned on and/or a rotation speed of a fan.

In step 707 to step 709, it is determined whether a wake-up event occurs. For example, in step 707, it is determined whether a current cache capacity of the service chip reaches the second cache threshold, where the second cache threshold is also the cache capacity waterline. If the current cache capacity of the service chip reaches the second cache threshold, step 710 is performed. In step 708, it is determined whether the hardware configuration changes. For example, it is determined whether a new service board is inserted, and whether a fault occurs on an object that does not sleep. If the hardware configuration changes, step 710 is performed. In step 709, it is determined whether the duration of the full-bandwidth traffic of the service chip reaches maximum full-bandwidth duration, where the maximum full-bandwidth duration may be maximum duration in a historical record, may be preset duration, or may be maximum duration involved in formulating the first sleep policy. If the maximum full-bandwidth duration is reached, step 710 is performed. It should be noted that step 709 is an optional determining condition. In addition, only when all determining conditions are "no", step 706 may be performed, and provided that one determining condition is "yes", step 710 is performed.

It can be learned from the foregoing that, in the network device sleep control method, both traffic of the network device and quality parameters (such as the delay, network jitter, and the quantity of packets lost due to congestion) of the network device are considered, so that when the network device executes the sleep policy, communication quality is ensured, and power consumption reduction is maximized.

It should be noted that the network device sleep control method is performed when traffic of the network device is almost the same every day (where the case may be referred to as a non-special period). However, in special periods such as holidays and major events, because traffic in the special periods differs greatly from the traffic in the non-special period, the network device may not perform the sleep method.

In this embodiment of this application, before the method is used to control the network device to sleep, it is determined whether measurement data, for example, traffic data, meets a rule item in the first sleep policy. If the measurement data meets the rule item in the first sleep policy, one or more sleep objects indicated according to an action item in the first sleep policy sleeps in a corresponding sleep time period. In this sleep method, the measurement data of the network device is considered, and the measurement data reflects that the network device processes a service. In this case, the method not only ensures that the network device normally processes the service, but also maximizes sleep of the network device, and further maximize power consumption reduction of the network device.

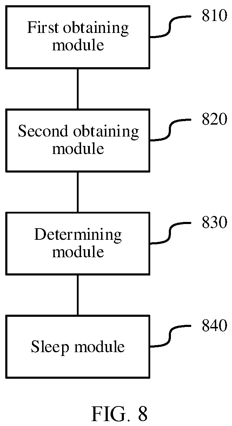

An embodiment of this application further provides a network device sleep control apparatus. The apparatus is used in a network device. As shown in FIG. 8, the apparatus includes:
a first obtaining module 810, configured to obtain measurement data, where the measurement data is attribute data that indicates the network device to process a service;
a second obtaining module 820, configured to obtain a first sleep policy, where the first sleep policy includes a rule item and an action item;
a determining module 830, configured to determine that the measurement data meets the rule item; and
a sleep module 840, configured to control, according to the action item, one or more indicated sleep objects to sleep in a corresponding sleep time period, where the sleep objects include at least one of the following objects: a switch board, a switch chip, and a switch port, the network device includes a service board and the switch board, the switch board includes the switch chip and the switch port, and the switch port is used for communication between the switch board and the service board.

Optionally, the sleep objects include the switch board and/or the switch chip, the measurement data includes traffic data, the rule item includes a traffic range, and the rule item indicates the network device to determine whether the traffic data meets the traffic range; and
the determining module 830 is configured to determine that the traffic data meets the traffic range.

Optionally, the traffic data includes first duration-level traffic, the traffic range includes a first duration-level traffic range, and the rule item indicates the network device to determine whether the first duration-level traffic meets the first duration-level traffic range; and
the determining module 830 is configured to determine that the first duration-level traffic meets the first duration-level traffic range.

Optionally, the action item indicates a sleep object corresponding to the first duration-level traffic range to sleep when it is determined that the first duration-level traffic in the sleep time period meets the first duration-level traffic range in the rule item; and
the sleep module 840 is configured to control the sleep object corresponding to the first duration-level traffic range to sleep in the corresponding sleep time period.

Optionally, the traffic data includes first duration-level traffic and second duration-level traffic, duration of the first duration-level traffic is longer than duration of the second duration-level traffic, and the traffic range includes a first duration-level traffic range and a full-bandwidth traffic duration range;
the rule item indicates the network device to determine whether the first duration-level traffic meets the first duration-level traffic range, and whether duration corresponding to full-bandwidth traffic in the second duration-level traffic meets the full-bandwidth traffic duration range; and
the determining module 830 is configured to determine that the first duration-level traffic meets the first duration-level traffic range, and that the duration corresponding to the full-bandwidth traffic in the second duration-level traffic meets the full-bandwidth traffic duration range.

Optionally, the action item indicates a sleep object corresponding to the first duration-level traffic range and the full-bandwidth traffic duration range to sleep when it is determined that the first duration-level traffic in the sleep time period meets the first duration-level traffic range in the rule item, and the duration corresponding to the full-bandwidth traffic in the second duration-level traffic meets the full-bandwidth traffic duration range in the rule item; and
the sleep module 840 is configured to control the sleep object corresponding to the first duration-level traffic range and the full-bandwidth traffic duration range to sleep in the corresponding sleep time period.

Optionally, the sleep objects are the switch port, the measurement data includes the first duration-level traffic, the second duration-level traffic, and a maximum cache capacity, the duration of the first duration-level traffic is longer than the duration of the second duration-level traffic, and the rule item includes a first traffic threshold, first full-bandwidth duration, and a first cache threshold;
the rule item indicates the network device to determine whether the first duration-level traffic of a service chip of the service board is less than the first traffic threshold, whether the duration of the full-bandwidth traffic in the second duration-level traffic is less than the first full-bandwidth duration, and whether the maximum cache capacity is greater than the first cache threshold; and
the determining module 830 is configured to determine that the first duration-level traffic of the service chip meets the first traffic threshold, the duration of the full-bandwidth traffic in the second duration-level traffic meets the first full-bandwidth duration, and the maximum cache capacity meets the first cache threshold.

Optionally, the action item indicates the switch port corresponding to the service chip to sleep when it is determined that the first duration-level traffic of the service chip in the sleep time period meets the first traffic threshold in the rule item, the duration of the full-bandwidth traffic in the second duration-level traffic meets the first full-bandwidth duration in the rule item, and the maximum cache capacity meets the first cache threshold; and
the sleep module 840 is configured to control the switch port corresponding to the service chip to sleep in the corresponding sleep time period.

Optionally, the sleep objects are the switch port, the measurement data includes the first duration-level traffic, the second duration-level traffic, and a maximum cache capacity, the duration of the first duration-level traffic is longer than the duration of the second duration-level traffic, and the rule item includes a second traffic threshold, second full-bandwidth duration, and a first cache threshold;
the rule item indicates the network device to determine whether the first duration-level traffic of a service chip of the service board is less than a second duration-level traffic threshold, whether the duration of the full-bandwidth traffic in the second duration-level traffic is less than the second full-bandwidth duration, and whether the maximum cache capacity is less than the first cache threshold; and
the determining module 830 is configured to determine that the first duration-level traffic of the service chip meets the second traffic threshold, the duration of the full-bandwidth traffic in the second duration-level traffic meets the second full-bandwidth duration, and the maximum cache capacity meets the first cache threshold.

Optionally, the action item indicates the switch port corresponding to the service chip to sleep when it is determined that the first duration-level traffic of the service chip in the sleep time period meets the second traffic threshold in the rule item, the duration of the full-bandwidth traffic in the second duration-level traffic meets the second full-bandwidth duration in the rule item, and the maximum cache capacity meets the first cache threshold; and
the sleep module 840 is configured to control the switch port corresponding to the service chip to sleep in the corresponding sleep time period.

Optionally, the determining module 830 is further configured to determine that the measurement data does not meet the rule item, and determine an updated action item based on the measurement data; and
the sleep module 840 is further configured to control, according to the updated action item, the indicated sleep objects to sleep in the corresponding sleep time period.

Optionally, the apparatus further includes:
an updating module, configured to update the first sleep policy according to the updated action item.

Optionally, the apparatus further includes:
a wake-up module, configured to wake up all or a part of the sleep objects when the sleep objects are in a sleep state and a wake-up event is detected, where
the wake-up event includes at least one of the following: a current cache capacity of at least one service chip reaches the second cache threshold, and a hardware configuration of the network device changes, where the hardware configuration change includes at least one of the following: a service board is newly added, and a fault occurs on an object in a non-sleep state.

Optionally, the wake-up module is configured to wake up all of the sleep objects when the newly added service board is detected; and
the apparatus further includes:
a control module, configured to control the network device to work in the non-sleep state for preset duration; and
a third obtaining module, further configured to determine a second sleep policy based on traffic of the service chip within the preset duration, where the second sleep policy is used to replace the first sleep policy.

Optionally, the apparatus further includes:
a heat dissipation control module, configured to: control, in the sleep time period, a heat dissipation system of the network device to dissipate heat according to a heat dissipation policy corresponding to the sleep object in the sleep time period; and
control the heat dissipation system to dissipate heat according to a heat dissipation policy corresponding to a remaining sleep object after wake-up when the wake-up event is detected.

Optionally, the heat dissipation system includes a fan, and adjusting the heat dissipation policy includes at least one of adjusting a quantity of fans turned on and adjusting a rotation speed of a fan in a turn-on state.

It should be noted that the first obtaining module 810, the second obtaining module 820, the determining module 830, the updating module, the wake-up module, the control module, the third obtaining module, and the heat dissipation control module may be implemented by a processor, or may be implemented by the processor in cooperation with a memory, or may be implemented by the processor by executing program instructions in the memory.

When the network device sleep control apparatus controls the network device to sleep, division of the foregoing functional modules is merely used as an example for description. During actual application, the foregoing functions may be allocated to different functional modules for implementation based on a requirement, in other words, an internal structure of the network device sleep control apparatus is divided into different functional modules, to implement all or a part of the functions described above. In addition, the network device sleep control apparatus provided in the foregoing embodiment and the network device sleep control method shown in FIG. 4 belong to a same concept. For a specific implementation process, refer to a corresponding method part. Details are not described herein again.

An embodiment of this application further provides a network device. The network device includes a processor, and the processor is configured to execute computer instructions, to enable the network device to perform the network device sleep control method.

An embodiment of this application provides a computer-readable storage medium. The computer-readable storage medium stores at least one computer instruction, and the computer instruction is read by a processor of a network device, to enable the network device to perform the network device sleep control method.

An embodiment of this application provides a computer program product. The computer program product includes computer instructions, and the computer instructions are stored in a computer-readable storage medium. A main control board of a network device reads the computer instructions from the computer-readable storage medium, and a processor executes the computer instructions, to enable the network device to perform the network device sleep control method provided in embodiments of this application.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a communication device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A network device sleep control method, wherein the method is applied to a network device, and the method comprises:
obtaining measurement data, wherein the measurement data is attribute data that indicates the network device to process a service;
obtaining a first sleep policy, wherein the first sleep policy comprises a rule item and an action item;
determining that the measurement data meets the rule item; and
controlling, according to the action item, one or more indicated sleep objects to sleep in a corresponding sleep time period, wherein the sleep objects comprise at least one of the following objects: a switch board, a switch chip, and a switch port, the network device comprises a service board and the switch board, the switch board comprises the switch chip and the switch port, and the switch port is used for communication between the switch board and the service board.

2. The method according to claim 1, wherein the sleep objects comprise the switch board and/or the switch chip, the measurement data comprises traffic data, the rule item comprises a traffic range, and the rule item indicates the network device to determine whether the traffic data meets the traffic range; and
the determining that the measurement data meets the rule item comprises:
determining that the traffic data meets the traffic range.

3. The method according to claim 2, wherein the traffic data comprises first duration-level traffic, the traffic range comprises a first duration-level traffic range, and the rule item indicates the network device to determine whether the first duration-level traffic meets the first duration-level traffic range; and
the determining that the traffic data meets the rule item comprises:
determining that the first duration-level traffic meets the first duration-level traffic range.

4. The method according to claim 3, wherein the action item indicates a sleep object corresponding to the first duration-level traffic range to sleep when it is determined that the first duration-level traffic in the sleep time period meets the first duration-level traffic range in the rule item;
the controlling, according to the action item, one or more sleep objects to sleep in a corresponding sleep time period comprises:
controlling the sleep object corresponding to the first duration-level traffic range to sleep in the corresponding sleep time period.

5. The method according to claim 2, wherein the traffic data comprises first duration-level traffic and second duration-level traffic, duration of the first duration-level traffic is longer than duration of the second duration-level traffic, and the traffic range comprises a first duration-level traffic range and a full-bandwidth traffic duration range;
the rule item indicates the network device to determine whether the first duration-level traffic meets the first duration-level traffic range, and whether duration corresponding to full-bandwidth traffic in the second duration-level traffic meets the full-bandwidth traffic duration range; and
the determining that the traffic data meets the rule item comprises:
determining that the first duration-level traffic meets the first duration-level traffic range, and that the duration corresponding to the full-bandwidth traffic in the second duration-level traffic meets the full-bandwidth traffic duration range.

6. The method according to claim 5, wherein the action item indicates a sleep object corresponding to the first duration-level traffic range and the full-bandwidth traffic duration range to sleep when it is determined that the first duration-level traffic in the sleep time period meets the first duration-level traffic range in the rule item, and the duration corresponding to the full-bandwidth traffic in the second duration-level traffic meets the full-bandwidth traffic duration range in the rule item; and
the controlling, according to the action item, one or more sleep objects to sleep in a corresponding sleep time period comprises:
controlling the sleep object corresponding to the first duration-level traffic range and the full-bandwidth traffic duration range to sleep in the corresponding sleep time period.

7. The method according to any one of claims 1 to 6, wherein the sleep objects comprise the switch port, the measurement data comprises the first duration-level traffic, the second duration-level traffic, and a maximum cache capacity, the duration of the first duration-level traffic is longer than the duration of the second duration-level traffic, and the rule item comprises a first traffic threshold, first full-bandwidth duration, and a first cache threshold;
the rule item indicates the network device to determine whether the first duration-level traffic of a service chip of the service board is less than the first traffic threshold, whether the duration of the full-bandwidth traffic in the second duration-level traffic is less than the first full-bandwidth duration, and whether the maximum cache capacity is greater than the first cache threshold; and
the determining that the measurement data meets the rule item comprises:
determining that the first duration-level traffic of the service chip meets the first traffic threshold, the duration of the full-bandwidth traffic in the second duration-level traffic meets the first full-bandwidth duration, and the maximum cache capacity meets the first cache threshold.

8. The method according to claim 7, wherein the action item indicates the switch port corresponding to the service chip to sleep when it is determined that the first duration-level traffic of the service chip in the sleep time period meets the first traffic threshold in the rule item, the duration of the full-bandwidth traffic in the second duration-level traffic meets the first full-bandwidth duration in the rule item, and the maximum cache capacity meets the first cache threshold;
the controlling, according to the action item, one or more sleep objects to sleep in a corresponding sleep time period comprises:
controlling the switch port corresponding to the service chip to sleep in the corresponding sleep time period.

9. The method according to any one of claims 1 to 6, wherein the sleep objects comprise the switch port, the measurement data comprises the first duration-level traffic, the second duration-level traffic, and a maximum cache capacity, the duration of the first duration-level traffic is longer than the duration of the second duration-level traffic, and the rule item comprises a second traffic threshold, second full-bandwidth duration, and a first cache threshold;
the rule item indicates the network device to determine whether the first duration-level traffic of a service chip of the service board is less than a second duration-level traffic threshold, whether the duration of the full-bandwidth traffic in the second duration-level traffic is less than the second full-bandwidth duration, and whether the maximum cache capacity is less than the first cache threshold; and
the determining that the measurement data meets the rule item comprises:
determining that the first duration-level traffic of the service chip meets the second traffic threshold, the duration of the full-bandwidth traffic in the second duration-level traffic meets the second full-bandwidth duration, and the maximum cache capacity meets the first cache threshold.

10. The method according to claim 9, wherein the action item indicates the switch port corresponding to the service chip to sleep when it is determined that the first duration-level traffic of the service chip in the sleep time period meets the second traffic threshold in the rule item, the duration of the full-bandwidth traffic in the second duration-level traffic meets the second full-bandwidth duration in the rule item, and the maximum cache capacity meets the first cache threshold;
the controlling, according to the action item, one or more sleep objects to sleep in a corresponding sleep time period comprises:
controlling the switch port corresponding to the service chip to sleep in the corresponding sleep time period.

11. The method according to any one of claims 1 to 10, wherein the method further comprises: determining that the measurement data does not meet the rule item;
determining an updated action item based on the measurement data; and
controlling, according to the updated action item, the indicated sleep objects to sleep in the corresponding sleep time period.

12. The method according to claim 11, wherein the method further comprises:
updating the first sleep policy according to the updated action item.

13. The method according to any one of claims 1 to 12, wherein the method further comprises:
waking up all or a part of the sleep objects when the sleep objects are in a sleep state and a wake-up event is detected, wherein
the wake-up event comprises at least one of the following: a current cache capacity of at least one service chip reaches a second cache threshold, and a hardware configuration of the network device changes, wherein the hardware configuration change comprises at least one of the following: a service board is newly added, and a fault occurs on an object in a non-sleep state.

14. The method according to claim 13, wherein the waking up all or a part of the sleep objects when a wake-up event is detected comprises:
waking up all of the sleep objects when the newly added service board is detected; and
the method further comprises:
controlling the network device to work in the non-sleep state for preset duration; and
determining a second sleep policy based on traffic of the service chip within the preset duration, wherein the second sleep policy is used to replace the first sleep policy.

15. The method according to claim 13, wherein the method further comprises:
controlling, in the sleep time period, a heat dissipation system of the network device to dissipate heat according to a heat dissipation policy corresponding to the sleep object in the sleep time period; and
controlling the heat dissipation system to dissipate heat according to a heat dissipation policy corresponding to a remaining sleep object after wake-up when the wake-up event is detected.

16. The method according to claim 15, wherein the heat dissipation system comprises a fan, and adjusting the heat dissipation policy comprises at least one of adjusting a quantity of fans turned on and adjusting a rotation speed of a fan in a turn-on state.

17. A network device sleep control apparatus, wherein the apparatus is used in a network device, and the apparatus comprises:
a first obtaining module, configured to obtain measurement data, wherein the measurement data is attribute data that indicates the network device to process a service;
a second obtaining module, configured to obtain a first sleep policy, wherein the first sleep policy comprises a rule item and an action item;
a determining module, configured to determine that the measurement data meets the rule item; and
a sleep module, configured to control, according to the action item, one or more indicated sleep objects to sleep in a corresponding sleep time period, wherein the sleep objects comprise at least one of the following objects: a switch board, a switch chip, and a switch port, the network device comprises a service board and the switch board, the switch board comprises the switch chip and the switch port, and the switch port is used for communication between the switch board and the service board.

18. The apparatus according to claim 17, wherein the sleep objects comprise the switch board and/or the switch chip, the measurement data comprises traffic data, the rule item comprises a traffic range, and the rule item indicates the network device to determine whether the traffic data meets the traffic range; and
the determining module is configured to determine that the traffic data meets the traffic range.

19. The apparatus according to claim 17 or 18, wherein the sleep objects comprise the switch port, the measurement data comprises first duration-level traffic, second duration-level traffic, and a maximum cache capacity, duration of the first duration-level traffic is longer than duration of the second duration-level traffic, and the rule item comprises a first traffic threshold, first full-bandwidth duration, and a first cache threshold;
the rule item indicates the network device to determine whether the first duration-level traffic of a service chip of the service board is less than the first traffic threshold, whether duration of full-bandwidth traffic in the second duration-level traffic is less than the first full-bandwidth duration, and whether the maximum cache capacity is greater than the first cache threshold; and
the determining module is configured to determine that the first duration-level traffic of the service chip meets the first traffic threshold, the duration of the full-bandwidth traffic in the second duration-level traffic meets the first full-bandwidth duration, and the maximum cache capacity meets the first cache threshold.

20. The apparatus according to claim 17 or 18, wherein the sleep objects comprise the switch port, the measurement data comprises first duration-level traffic, second duration-level traffic, and a maximum cache capacity, duration of the first duration-level traffic is longer than duration of the second duration-level traffic, and the rule item comprises a second traffic threshold, second full-bandwidth duration, and a first cache threshold;
the rule item indicates the network device to determine whether the first duration-level traffic of a service chip of the service board is less than a second duration-level traffic threshold, whether duration of full-bandwidth traffic in the second duration-level traffic is less than the second full-bandwidth duration, and whether the maximum cache capacity is less than the first cache threshold; and
the determining module is configured to determine that the first duration-level traffic of the service chip meets the second traffic threshold, the duration of the full-bandwidth traffic in the second duration-level traffic meets the second full-bandwidth duration, and the maximum cache capacity meets the first cache threshold.

21. The apparatus according to any one of claims 17 to 20, wherein the determining module is further configured to:
determine that the measurement data does not meet the rule item, and determine an updated action item based on the measurement data; and
the sleep module is further configured to control, according to the updated action item, the indicated sleep objects to sleep in the corresponding sleep time period.

22. The apparatus according to any one of claims 17 to 21, the apparatus further comprises:
a wake-up module, configured to wake up all or a part of the sleep objects when the sleep objects are in a sleep state and a wake-up event is detected, wherein
the wake-up event comprises at least one of the following: a current cache capacity of at least one service chip reaches a second cache threshold, and a hardware configuration of the network device changes, wherein the hardware configuration change comprises at least one of the following: a service board is newly added, and a fault occurs on an object in a non-sleep state.

23. A network device, wherein the network device comprises a processor, and the processor is configured to execute computer instructions, to enable the network device to perform the network device sleep control method according to any one of claims 1 to 16.

24. A computer-readable storage medium, wherein the computer-readable storage medium stores at least one computer instruction, and the computer instruction is read by a processor of a network device, to enable the network device to perform the network device sleep control method according to any one of claims 1 to 16.
